# EUROPEAN PATENT APPLICATION

(11) **EP 2 465 863 A1**
(43) Date of publication of application: **20.06.2012**
(21) Application number: 10808093.8
(22) Date of filing: 25.03.2010
(51) Int. Cl.: C07F 19/00, C01G 25/06, C07F 7/00, C07F 9/38, H01B 1/06, H01B 13/00, H01M 8/02, H01M 8/10

(54) **METHOD FOR PRODUCING STRONGLY ACIDIC ZIRCONIUM PARTICLES, METHOD FOR PRODUCING PROTON CONDUCTING MATERIAL AND PROTON CONDUCTING FILM, PROTON CONDUCTING FILM, ELECTRODE FOR FUEL CELL, FILM-ELECTRODE JOINED BODY, FUEL CELL**

(30) Priority: 13.08.2009 JP 2009187729; 30.11.2009 JP 2009272239; 24.02.2010 WO PCT/JP2010/052852
(71) Applicant: Tokyo Institute of Technology, Tokyo 152-8550 (JP)
(72) Inventor: YAMAGUCHI, Takeo, Yokohama-shi Kanagawa 226-8503 (JP); KIKUCHI, Yuma, Yokohama-shi Kanagawa 226-8503 (JP); LEE, Ju-Myeung, Yokohama-shi Kanagawa 226-8503 (JP); OHASHI, Hidenori, Yokohama-shi Kanagawa 226-8503 (JP); TAMAKI, Takanori, Yokohama-shi Kanagawa 226-8503 (JP)
(74) Representative: Müller - Hoffmann & Partner
(86) International application number: PCT/JP2010/055242
(87) International publication number: WO 2011/018908

(57) **Abstract**

The disclosed methods enable zirconium sulfophenyl phosphonate, zirconium sulfate, or zirconia sulfate, which has high performance as a proton conducting material and high catalytic activity, to be produced at low temperature by reaction by adding sulfophenyl phosphonic acid or sulfuric acid to zirconium nanoparticles, the zirconium nanoparticles being a precursor of strongly acidic zirconium particles obtained by reacting zirconium alkoxide with zirconium butoxide as a chelating agent and nitric acid as a catalyst in isopropyl alcohol as a solvent.

## Description

### Technical Field

The present invention relates to a method for producing strongly acidic zirconium particles having high efficiency as proton conducting materials and high catalytic activity, a proton conducting material in which the strongly acidic zirconium particles obtained by this production method are used, a method for producing a proton conducting membrane with highly efficiency, the proton conducting membrane obtained by the producing method, an electrode for a fuel cell, a membrane electrode assembly, and a fuel cell.
This patent application claims the priority of Japanese Patent Application No. 2009-187729 filed on 13 August, 2009 in Japan, Japanese Patent Application No. 2009-272239 filed on 30 November, 2009 in Japan, and PCT Patent Application No. PCT/JP2010/52852 filed on 24 February, 2010, which are incorporated herein by reference.

### Background Art

Polymer electrolyte fuel cells (PEFC) have high power density, and are expected to be applied to automobiles. Polymer electrolyte fuel cells, when used for automobiles, need to exhibit proton conduction at -30 degrees C for the starting and a wide temperature range from the ordinary temperature to 120 degrees C and at a humidity range from 20 to 100% relative humidity. For example, a fluorinated polymer with a sulfonic acid group (Nafion (registered trademark), etc.) is used as a proton conducting material, but the fluorinated polymer has insufficient proton conductivity at a high temperature and a low humidity, and accordingly an alternative material is required to be newly developed. However, it is hard to develop a proton conducting material for polymer electrolyte fuel cells by using only a single material, and therefore the development using an organic and inorganic composite material is desirable. Here, the organic and inorganic composite material means a composite material of a polymer and an inorganic material.

As the inorganic material included in the organic and inorganic composite material, zirconium sulphophenyl phosphonic acid (hereinafter referred to as ZrSPP)), and zirconium sulfate compounds, such as zirconium sulfate (hereinafter referred to as Zr (S0₄)₂) and zirconia sulfate (hereinafter referred to as SZrO₂), can be mentioned. These materials have a Hammett acidity function H₀, that is, H₀ = -13 for Zr (S0₄)₂, H₀ = -5 for ZrSPP, and H₀ = -16 for SZrO₂, and also have a high acid level and a high proton providing ability, therefore can be considered to be used as a catalyst for PEFC, a proton conducting material.

ZrSPP can be obtained by refluxing SPP (m-sulphophenyl phosphonic acid) and phosphoric acid with using ZrClO₂, a zirconium compound, as a starting material (Refer to Non Patent Literature 1). In addition, SZrO₂ can be obtained by putting ZrOCl₂·8H₂O into an NH₃ solution (pH = 10) to make ZrO₂·nH₂O and then adding sulfuric acid to this ZrO₂·nH₂O and calcining the mixture (Refer to Non Patent Literature 2).

However, if ZrSPP and a zirconium sulfate compound are used as a proton conducting material, it is desirable to produce an organic and inorganic composite material from the viewpoint of increase in the performance as a proton conducting material. According to conventional production methods, a polymer composing an organic and inorganic composite material needs to be treated at a high temperature exceeding a heat-resistant temperature of the polymer in a producing process. For example, ZrSPP needs to be produced at a high temperature of not less than 200 degrees C, and SZrO₂ needs to be produced at a high temperature of not less than 520 degrees C. As a result, ZrSPP and a zirconium sulfate compound agglomerate to become a large particle, and therefore it is difficult to maintain the performance as a proton conducting material, accordingly it has been not suitable to use as an inorganic material composing an organic and inorganic composite material.

### Related Technical Documents

### Non Patent Documents

Non Patent Literature 1:
   Alberti, G. et al., Journal of Materials Chemistry 14 (2004) 1910-1914
Non Patent Literature 2:
   Hara, S. et al., Solid State Ionics 168 (2004) 111

### Summary of the Invention

### Problem to be solved by the Invention

The present invention is to solve the above-mentioned conventional problem, and an object of the present invention is to provide a production method of strongly acidic zirconium particles which can be used as an inorganic material composing an organic and inorganic composite material, a proton conducting material in which the strongly acidic zirconium particles obtained by the production method are used, a production method of a proton conducting membrane, a proton conducting membrane obtained by the production method, an electrode for a fuel cell, a membrane electrode assembly, and a fuel cell.

### Solution to Problem

In a production method of strongly acidic zirconium particles according to the present invention, the strongly acidic zirconium particles are obtained by reaction by adding sulfophenyl phosphonic acid to zirconium nanoparticles, the zirconium nanoparticles obtained by reacting a zirconium alkoxide with a chelating agent and a catalyst in a solvent.

A proton conducting material according to the present invention is obtained by using strongly acidic zirconium particles obtained by reaction by adding sulfophenyl phosphonic acid to zirconium nanoparticles, the zirconium nanoparticles obtained by reacting a zirconium alkoxide with a chelating agent and a catalyst in a solvent.

A production method of strongly acidic zirconium particles according to the present invention comprises: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a dispersion by pouring the polymer solution into the zirconium nanoparticle dispersion, the dispersion including the polar organic solvents and a proton conducting composite material having the proton conducting polymer and the zirconium nanoparticles; a proton conducting composite material preparation step of obtaining the proton conducting composite material by removing the first polar organic solvent and the second polar organic solvent from the dispersion obtained by the second dispersing step; and a reaction step of obtaining strongly acidic zirconium particles by reaction by adding sulfophenyl phosphonic acid to the proton conducting composite material obtained by the proton conducting composite material preparation step.

A proton conducting material according to the present invention is obtained by using strongly acidic zirconium particles obtained by a production method of strongly acidic zirconium particles are used, the production method comprising: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a dispersion by pouring the polymer solution into the zirconium nanoparticle dispersion, the dispersion including the polar organic solvents and a proton conducting composite material having the proton conducting polymer and the zirconium nanoparticles; a proton conducting composite material preparation step of obtaining a proton conducting composite material by removing the first polar organic solvent and the second polar organic solvent from the dispersion obtained by the second dispersing step; and a reaction step of obtaining strongly acidic zirconium particles by reaction by adding sulfophenyl phosphonic acid to the proton conducting composite material obtained by the proton conducting composite material preparation step.

A production method of a proton conducting membrane according to the present invention comprises: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a composite material dispersion by mixing the polymer solution with the zirconium nanoparticle dispersion, the dispersion including the polar organic solvents and a proton conducting composite material having the proton conducting polymer and the zirconium nanoparticles; an impregnation step of impregnating pores of a porous polymer base material with the composite material dispersion obtained by the second dispersing step; and a reaction step of obtaining a proton conducting membrane in which a strongly acidic zirconium particle compound and the proton conducting polymer are fixed to the porous polymer base material by reacting sulfophenyl phosphonic acid with the porous polymer base material impregnated with the composite material dispersion, the strongly acidic zirconium particle compound being produced from the zirconium nanoparticles and the sulfophenyl phosphonic acid.

A proton conducting membrane according to the present invention is obtained by a production method of the proton conducting membrane, the production method comprising: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a composite material dispersion by mixing the polymer solution with the zirconium nanoparticle dispersion, the composite material dispersion including the polar organic solvents and a proton conducting composite material having the proton conducting polymer and the zirconium nanoparticles; an impregnation step of impregnating pores of a porous polymer base material with the composite material dispersion obtained by the second dispersing step; and a reaction step of obtaining a proton conducting membrane in which a strongly acidic zirconium particle compound and the proton conducting polymer are fixed to the porous polymer base material by reacting sulfophenyl phosphonic acid with the porous polymer base material impregnated with the composite material dispersion, the strongly acidic zirconium particle compound being produced from the zirconium nanoparticles and the sulfophenyl phosphonic acid.

In a production method of strongly acidic zirconium particles according to the present invention, the strongly acidic zirconium particles are obtained by reaction by adding sulfuric acid to zirconium nanoparticles obtained by reacting a zirconium alkoxide with a chelating agent and a catalyst in a solvent.

A proton conducting material according to the present invention is obtained by using strongly acidic zirconium particles obtained by a production method of the strongly acidic zirconium particles in which sulfuric acid is added to zirconium nanoparticles and reacted therewith, the zirconium nanoparticles being obtained by reacting a zirconium alkoxide with a chelating agent and a catalyst in a solvent.

A production method of strongly acidic zirconium particles according to the present invention comprises: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a dispersion by pouring the polymer solution into the zirconium nanoparticle dispersion, the dispersion including the polar organic solvents and a proton conducting composite material having the proton conducting polymer and the zirconium nanoparticles; a proton conducting composite material preparation step of obtaining the proton conducting composite material by removing the first polar organic solvent and the second polar organic solvent from the dispersion obtained by the second dispersing step; and a reaction step of obtaining strongly acidic zirconium particles by reaction by adding sulfuric acid to the proton conducting composite material obtained by the proton conducting composite material preparation step.

A proton conducting material according to the present invention is obtained by using strongly acidic zirconium particles obtained by a production method of the proton conducting material, the method comprising: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a dispersion by pouring the polymer solution into the zirconium nanoparticle dispersion, the dispersion including the polar organic solvents and a proton conducting composite material having the proton conducting polymer and the zirconium nanoparticles; a proton conducting composite material preparation step of obtaining the proton conducting composite material by removing the first polar organic solvent and the second polar organic solvent from the dispersion obtained by the second dispersing step; and a reaction step of obtaining strongly acidic zirconium particles by reaction by adding sulfuric acid to the proton conducting composite material obtained by the proton conducting composite material preparation step.

A production method of a proton conducting membrane according to the present invention comprises: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a composite material dispersion by mixing the polymer solution with the zirconium nanoparticle dispersion, the dispersion including the polar organic solvents and a proton conducting composite material having the proton conducting polymer and the zirconium nanoparticles; an impregnation step of impregnating pores of a porous polymer base material with the composite material dispersion obtained by the second dispersing step; and a reaction step of obtaining a proton conducting membrane in which a strongly acidic zirconium particle compound and the proton conducting polymer are fixed to the porous polymer base material by reacting sulfuric acid with the porous polymer base material impregnated with the composite material dispersion, the strongly acidic zirconium particle compound being produced from the zirconium nanoparticles and the sulfuric acid.

A proton conducting membrane according to the present invention is obtained by a production method of the proton conducting membrane. the production method comprising: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a composite material dispersion by mixing the polymer solution with the zirconium nanoparticle dispersion, the composite material dispersion including the polar organic solvents and a proton conducting composite material having the proton conducting polymer and the zirconium nanoparticles; an impregnation step of impregnating pores of a porous polymer base material with the composite material dispersion obtained by the second dispersing step; and a reaction step of obtaining a proton conducting membrane in which a strongly acidic zirconium particle compound and the proton conducting polymer are fixed to the porous polymer base material by reacting sulfuric acid with the porous polymer base material impregnated with the composite material dispersion, the strongly acidic zirconium particle compound being produced from the zirconium nanoparticles and the sulfuric acid.

In a production method of strongly acidic zirconium particles according to the present invention, the strongly acidic zirconium particles are obtained by reacting zirconium nanoparticles with a sulfuric acid solution pH-adjusted by alkali, the zirconium nanoparticles obtained by reacting a zirconium alkoxide with a chelating agent and a catalyst in a solvent.

A proton conducting material according to the present invention is obtained by using strongly acidic zirconium particles obtained by reacting zirconium nanoparticles with a sulfuric acid solution pH-adjusted by alkali, the zirconium nanoparticles obtained by reacting a zirconium alkoxide with a chelating agent and a catalyst in a solvent.

A production method of strongly acidic zirconium particles according to the present invention comprises: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a dispersion by pouring the polymer solution into the zirconium nanoparticle dispersion, the dispersion including the polar organic solvents and a proton conducting composite material having the proton conducting polymer and the zirconium nanoparticles; a proton conducting composite material preparation step of obtaining the proton conducting composite material by removing the first polar organic solvent and the second polar organic solvent from the dispersion obtained by the second dispersing step; and a reaction step of obtaining strongly acidic zirconium particles by reaction by adding a sulfuric acid solution pH-adjusted by alkali to the proton conducting composite material obtained by the proton conducting composite material preparation step.

A proton conducting material according to the present invention is obtained by using strongly acidic zirconium particles obtained by a production method of the proton conducting material, the production method comprising: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a dispersion by pouring the polymer solution into the zirconium nanoparticle dispersion, the dispersion including the polar organic solvents and a proton conducting composite material having the proton conducting polymer and the zirconium nanoparticles; a proton conducting composite material preparation step of obtaining the proton conducting composite material by removing the first polar organic solvent and the second polar organic solvent from the dispersion obtained by the second dispersing step; and a reaction step of obtaining strongly acidic zirconium particles by reaction by adding the sulfuric acid solution pH-adjusted by alkali to the proton conducting composite material obtained by the proton conducting composite material preparation step.

A production method of strongly acidic zirconium particles according to the present invention comprises: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a composite material dispersion by mixing the polymer solution with the zirconium nanoparticle dispersion, the composite material dispersion including the polar organic solvents and a proton conducting composite material having the proton conducting polymer and the zirconium nanoparticles; an impregnation step of impregnating pores of a porous polymer base material with the composite material dispersion obtained by the second dispersing step; and a reaction step of obtaining proton conducting membrane in which a strongly acidic zirconium particle compound and the proton conducting polymer are fixed to the porous polymer base material by reacting the porous polymer base material impregnated with the composite material dispersion with a sulfuric acid solution pH-adjusted by alkali, the strongly acidic zirconium particle compound being produced from the zirconium nanoparticles and the sulfuric acid solution pH-adjusted by alkali.

A proton conducting membrane according to the present invention is obtained by a production method of a proton conducting membrane, the production method comprising: a polymer solution preparation step of obtaining a polymer solution by dissolving a proton conducting polymer in a first polar organic solvent; a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent; a second dispersing step of obtaining a composite material dispersion by mixing the polymer solution with the zirconium nanoparticle dispersion, the composite material dispersion including the polar organic solvents and a proton conducting composite material having the proton conducting polymer and the zirconium nanoparticles; an impregnation step of impregnating pores of a porous polymer base material with the composite material dispersion obtained by the second dispersing step; and a reaction step of obtaining a proton conducting membrane in which a strongly acidic zirconium particle compound and the proton conducting polymer are fixed to the porous polymer base material by reacting the porous polymer base material impregnated with the composite material dispersion with a sulfuric acid solution pH-adjusted by alkali, the strongly acidic zirconium particle compound being produced from the zirconium nanoparticles and the sulfuric acid solution pH-adjusted by alkali.

In a production method of strongly acidic zirconium particles according to the present invention, the strongly acidic zirconium particles are obtained by reaction by adding sulfonic acid to zirconium nanoparticles, the zirconium nanoparticles being obtained by reacting a zirconium alkoxide with a chelating agent and a catalyst in a solvent.

A proton conducting material according to the present invention is obtained by using strongly acidic zirconium particles obtained by reaction by adding sulfonic acid to zirconium nanoparticles, the zirconium nanoparticles being obtained by reacting a zirconium alkoxide with a chelating agent and a catalyst in a solvent.

An electrode for a fuel cell according to the present invention comprises a catalyst layer including the proton conducting material.

A membrane electrode assembly according to the present invention is obtained by using the proton conducting membrane and the electrode having a catalyst layer including the proton conducting material.

A fuel cell according to the present invention is obtained by using the membrane electrode assembly.

### Effect of the Invention

According to the present invention, the use of zirconium nanoparticles enables strongly acidic zirconium particles which have highly performance as proton conducting materials and high catalytic activity to be produced at lower temperature, and thereby the strongly acidic zirconium particles can be used as proton conducting materials.

### Brief Description of the Drawings

Fig. 1 is a flow chart for explaining an example of a production method of a zirconium sulfate compound.
Figs. 2A and 2B are schematic diagrams schematically illustrating reaction formulae of ZrSPP.
Fig. 3 shows a SEM image of ZrSPP.
Fig. 4 shows a XRD pattern of ZrSPP.
Fig. 5 shows a FT-IR spectrum of ZrSPP.
Fig. 6 shows a TGA spectrum of ZrSPP.
Fig. 7 shows a TG-MS spectrum of ZrSPP.
Fig. 8 shows a XRD pattern of ZrSPP after TGA measurements.
Figs. 9A, 9B, and 9C show graphs showing proton conductivity of ZrSPP at measurement temperatures of 90 degrees C, 80 degrees C, and 70 degrees C, respectively.
Fig. 10 shows XRD patterns of ZrSPP after hot water resistance tests.
Fig. 11 shows FT-IR spectra of ZrSPP after hot water resistance tests.
Fig. 12 shows a change in weight of ZrSPP after Fenton's test.
Fig. 13 shows XRD patterns of ZrSPP before and after Fenton's test.
Fig. 14 shows a SEM image of a zirconium sulfate compound.
Fig. 15 shows a XRD pattern of a zirconium sulfate compound.
Figs. 16A, 16B, and 16C show XRD patterns of a zirconium sulfate compound in the cases of using 1.0M sulfuric acid, 2.0M sulfuric acid, and 3.0M sulfuric acid, respectively.
Figs. 17A, 17B, and 17C show XRD patterns of a zirconium sulfate compound in the case of sulfuric acid treatment at temperatures of 150 degrees C, 60 degrees C, and 40 degrees C, respectively.
Fig. 18 shows XRD patterns of a zirconium sulfate compound.
Fig. 19 shows a XRD pattern of a zirconium sulfate compound.
Fig. 20 shows a FT-IR spectrum of a zirconium sulfate compound.
Fig. 21 shows a FT-IR spectrum of a zirconium sulfate compound.
Fig. 22 shows a FT-IR spectrum of a zirconium sulfate compound.
Figs. 23A and 23B show XRD patterns of a sample obtained in Example 10 and a zirconium sulfate compound mentioned in the previously cited literature, respectively.
Figs. 24A, 24B, and 24C show XPS spectra of a sample obtained in Example 2, a sample obtained in Example 11, and a zirconium sulfate compound mentioned in the previously cited literature, respectively.
Fig. 25 shows TGA spectra of a zirconium compound.
Fig. 26 shows a TG-MS spectrum of a zirconium sulfate compound.
Fig. 27 shows a XRD pattern of a zirconium sulfate compound after TGA measurements.
Fig. 28 shows TGA spectra of a zirconium sulfate compound.
Fig. 29A and 29B show TGA spectra and TG-MS spectra of a zirconium sulfate compound.
Fig. 30 shows a TGA spectrum and a TG-MS spectrum of zirconium nanoparticles.
Fig. 31A shows TGA spectra and TG-MS spectra of a sample obtained in Example 10, and Fig. 31B shows TGA spectra and TG-MS spectra of zirconium nanoparticles mentioned in the previously cited literature.
Fig. 32 shows a XRD pattern of a zirconium sulfate compound after water resistance tests.
Fig. 33 shows a graph illustrating proton conductivity of a zirconium sulfate compound at a measurement temperature of 90 degrees C.
Fig. 34A, Fig. 34B, and Fig. 34C show graphs showing proton conductivity of a zirconium sulfate compound at measurement temperatures of 90 degrees C, 80 degrees C, and 70 degrees C, respectively.
Fig. 35 shows a graph illustrating proton conductivity of a zirconium sulfate compound at a measurement temperature of 90 degrees C.
Fig. 36A shows XRD patterns of a sample obtained in Example 2 before and after hot water resistance tests, and Fig. 36B shows XRD patterns of a sample obtained in Example 10 before and after hot water resistance tests.
Fig. 37A shows FT-IR spectra of a sample obtained in Example 2 before and after hot water resistance tests, Fig. 37B shows FT-IR spectra of a sample obtained in Example 10 before and after hot water resistance tests, and Fig. 37C shows FT-IR spectra of a zirconium sulfate compound mentioned in the previously cited literature.
Figs. 38A and 38B show a change in weight of a sample obtained in Example 2 after Fenton's test and a change in weight of a sample obtained in Example 10 after Fenton's test, respectively.
Fig. 39A and Fig. 39B show XRD patterns of a sample obtained in Example 2 after Fenton's test and a sample obtained in Example 10 after Fenton's test, respectively.
Fig. 40 shows FT-IR spectra of a sample obtained in Example 2 after Fenton's test, respectively.
Fig. 41 shows XRD patterns of a ZrSPP-SPES cast membrane.
Fig. 42 shows a XRD pattern of a ZrSPP-SPES pore-filling membrane.
Fig. 43 shows FT-IR spectra of a ZrSPP-SPES pore-filling membrane.
Fig. 44 shows graphs illustrating conductivity of a ZrSPP-SPES pore-filling membrane measured at a temperature of 90 degrees C.
Fig. 45 shows graphs illustrating conductivity of a ZrSPP-SPES pore-filling membrane measured at a temperature of not more than 0 degrees C.
Fig. 46A schematically shows a capping MEA obtained in Example 16, and Fig. 46B shows a cross-sectional view schematically illustrating a capping MEA obtained in Example 16.
Fig. 47 schematically shows an example of a configuration in fuel cell tests.
Fig. 48 shows graphs illustrating results of cell performance evaluation of a capping MEA obtained in Example 16 at a temperature of 60 degrees C and a humidity of 20 to 80%.
Fig. 49 shows graphs illustrating results of cell performance evaluation of a capping MEA obtained in Example 16 at a temperature of 90 degrees C and a humidity of 20 to 80%.
Fig. 50 shows graphs illustrating results of cell performance evaluation of a capping MEA obtained in Example 16 at a temperature of 120 degrees C and a humidity of 10 to 50%.

### Description of Embodiments

Hereinafter, embodiments of the present invention (hereinafter referred to as embodiments) are described. The description is given in the following order.
1. Production method of zirconium nanoparticles (Zr precursor).
2. Production method of a zirconium sulfate compound using zirconium nanoparticles
3. Production method of ZrSPP using zirconium nanoparticles
4. Production method of a zirconium sulfate compound or ZrSPP in a proton conducting polymer
5. Production method of a zirconium sulfate compound or ZrSPP in a pore-filling membrane
6. Membrane electrode assembly (MEA)
7. Fuel cell
8. Examples
9. Evaluation tests

### <1. Production method of zirconium nanoparticles>

Zirconium nanoparticles according to the embodiment are obtained by reacting a zirconium alkoxide as a starting material with a chelating agent (surface modifier) and a catalyst in a solvent, that is, by hydrolysis and polycondensation reaction of metal alkoxide, generally called sol-gel process.

The solvent is a solvent dissolving the zirconium alkoxide as the starting material, and as the solvent, for example, alcohols (methanol, ethanol, 1-propanol, 2-propanol (isopropyl alcohol), 2-methoxyethanol, 2-ethoxyethanol, 1-butanol, ethylene glycol mono-alkyl ether, propylene glycol mono-alkyl ether, polyethylene glycol mono-alkyl ether, polypropylene glycol mono-alkyl ether, etc.), polyhydric alcohols (ethylene glycol, propylene glycol, polyethylene glycol, polypropylene glycol, glycerol, etc.), carbonate compounds (ethylene carbonate, propylene carbonate, etc.), cyclic ethers (dioxane, tetrahydrofuran, etc.), chain ethers (diethyl ether, ethylene glycol dialkyl ether, polypropylene dialkyl ether, etc.), nitrile compounds (acetonitrile, glutarodinitrile, methoxy acetonitrile, propionitrile, benzonitrile, etc.), esters (carboxylate ester, phosphate ester, phosphonate ester, etc.), non-proton polar substances (dimethyl sulfoxide, sulfolane, dimethylformamide, dimethylacetamide, etc.), non-polar solvents (toluene, xylene, etc.), chloride solvents (methylene chloride, ethylene chloride, etc.), water, etc. are employed. Among these solvents, 2-propanol is preferably used in consideration of a chelate effect and an effect on a particle diameter of a product. In addition, these solvents may be used alone, or two or more solvents may be used in combination.

Alkoxide in the zirconium alkoxide is a linear or branched chain alkyl group, and preferably has a carbon number of 1 to 24, more preferably a carbon number of 1 to 10. As the alkoxide, for example, a methyl group, an ethyl group, a propyl group, an i-propyl group, an i-butyl group, a pentyl group, a hexyl group, an octyl group, a 2-ethyl hexyl group, a t-octyl group, a decyl group, a dodecyl group, a tetradecyl group, a 2-hexyldecyl group, a hexadecyl group, an octadecyl group, a cyclohexylmethyl group, an octylcyclohexyl group, etc. can be mentioned.

As the chelating agent, used is a substance which chelates zirconium alkoxide to inhibit the hydrolysis and polycondensation reaction thereof, for example, acetoacetic esters (ethyl acetoacetate, etc.), 1,3-diketones (acetylacetone, 3-methyl-2,4-pentanedione, etc.), or acetoacetamides (N,N'-dimethylamino acetoacetamide, etc.). Among these chelating agents, acetylacetone is preferably used so as to exert a chelating effect more. As for the concentration of the chelating agent, for example, the molar ratio with respect to zirconium atom is preferably approximately 0.5 to 2.5. Such concentration prevents insufficient chelate effects caused by repulsion of chelates to each other, and thereby zirconium nanoparticles with a particle diameter of nanosize can be produced.

The catalyst is added in order to initiate the hydrolysis and polycondensation reaction of the zirconium alkoxide, and as the catalyst, acid or alkali is used, for example. As the acid, inorganic or organic proton acid can be used. As the inorganic proton acid, for example, hydrochloric acid, sulfuric acid, boric acid, nitric acid, perchloric acid, tetrafluoroboric acid, hexafluoroarsenic acid, hydrobromic acid, etc. can be mentioned. As the organic proton acid, for example, acetic acid, oxalic acid, methanesulfonic acid, etc. can be mentioned. As the alkali, for example, hydroxide of alkali metal such as sodium hydroxide, ammonia, etc. can be mentioned. In addition, two or more kinds of these acids or alkalis may be used in combination. As the catalyst, for example, it is preferable that a 1M nitric acid solution is used and a molar ratio of proton to zirconium is 0.2 to 0.6. Using the nitric acid solution with such concentration, the chelate effect by the chelating agent is fully exerted and accordingly the particle diameter of zirconium nanoparticles can be prevented from becoming too large due to a polycondensation reaction.

Next, an example of methods for producing zirconium nanoparticles is described. A zirconium alkoxide is dispersed into a solvent, and a chelating agent is added into the zirconium alkoxide solution. Then, a catalyst is added into the zirconium alkoxide solution which the chelating agent is added into.

For example, when acetylacetone as the chelating agent and a nitric acid solution as the catalyst are added into the zirconium alkoxide solution, a hydrolysis reaction shown in the following [Chemical Formula 1 and a polycondensation reaction shown in [Chemical Formula 2] proceed.

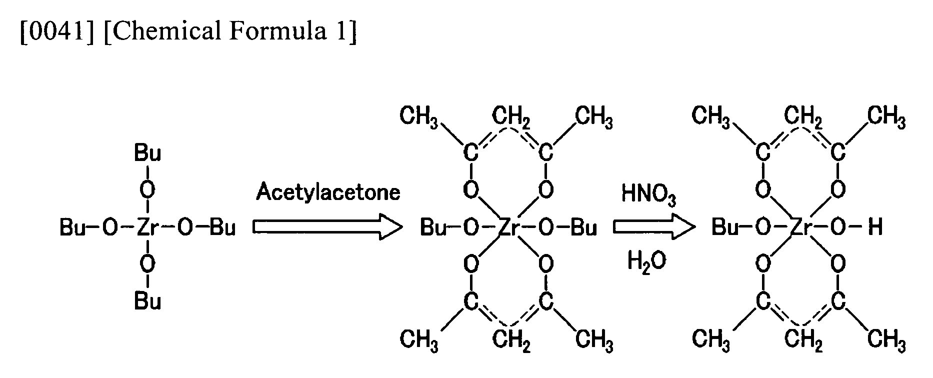

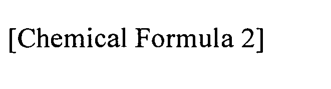

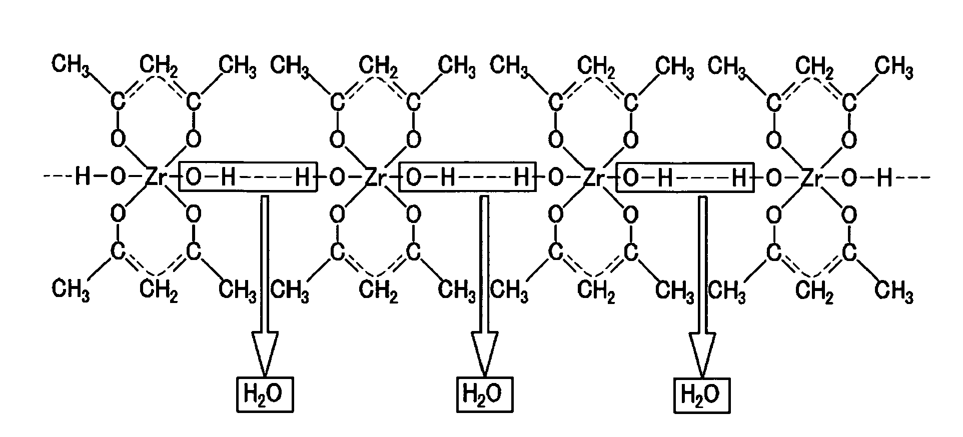

Then, the solvent is dried, and a product after the drying, that is, powders of zirconium nanoparticles is recovered. The recovered zirconium nanoparticles have a particle diameter of nano size. Here, note that the zirconium nanoparticles having a particle diameter of nano size are, for example, particles having a volume average particle diameter of several to tens of nm, measured by dynamic light scattering.

### <2. Production method of a zirconium sulfate compound using zirconium nanoparticles>

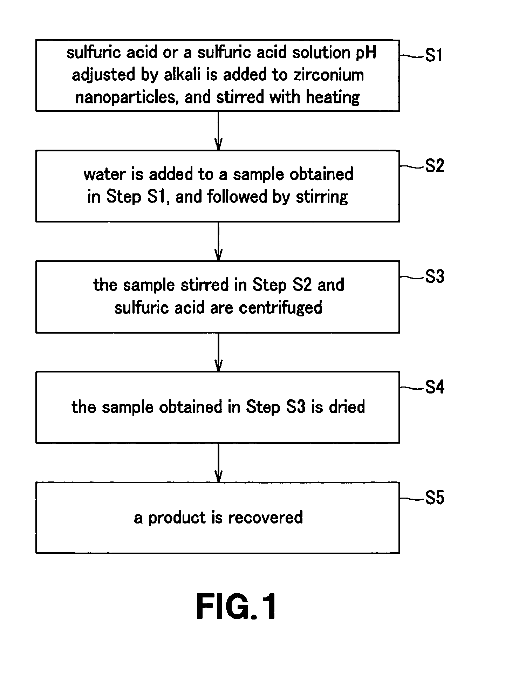

Next, described is an example of a method for producing a zirconium sulfate compound, that is, strongly acidic zirconium particles obtained by using the above-mentioned zirconium nanoparticles. As shown in Fig. 1, sulfuric acid or a sulfuric acid solution pH adjusted by alkali is added to the above-mentioned zirconium nanoparticles, and stirred with heating (Step S1). As the alkali, a hydroxide of an alkali metal, a hydroxide of an alkaline earth metal, and a substance exhibiting basicity in an aqueous solution, such as ammonia or amine, can be mentioned, and more specifically, an ammonium aqueous solution and sodium hydroxide can be mentioned. In Step S1, a concentration of the sulfuric acid to be added and a sulfate ion concentration of the sulfuric acid solution pH adjusted by the alkali are preferably adjusted to 1 to 3M. Moreover, the pH of the sulfuric acid solution pH adjusted by the alkali is preferably adjusted to 1 to 8. With such concentration and pH enable a basic skeleton of the zirconium sulfate compound to be formed. In Step S1, a stirring time is preferably set to a time allowing the basic skeleton of the zirconium sulfate compound to be fully formed, for example, not less than 16 hours. In Step S1, a temperature of stirring is preferably not less than 40 degrees C in consideration of forming the basic skeleton of the zirconium sulfate compound.

Next, water is added to a sample obtained in Step S 1, and followed by stirring (Step S2). Subsequently, the sample stirred in Step S2 and sulfuric acid are centrifuged (Step S3). Then, the sample obtained in Step S3 is dried (Step S4) and a product is recovered (Step S5).

Thus, in a production method of a zirconium sulfate compound according to the embodiment, by using zirconium nanoparticles whose particle diameter is set to nano size so as to increase surface area and accordingly have high reactivity under acid environments, there is not required the necessity of energy to obtain a zirconium sulfate compound by reacting zirconium nanoparticles with the sulfuric acid or the sulfuric acid solution pH-adjusted by alkali, for example, a reaction under high temperature conditions as in the conventional methods. Thus, a zirconium sulfate compound can be produced under lower temperature conditions.

Furthermore, according to a production method of a zirconium sulfate compound of the embodiment, a zirconium sulfate compound with high proton conductivity can be obtained. Therefore, the zirconium sulfate compound obtained by the production method of the zirconium sulfate compound of the embodiment can achieve improvement in performance as a proton conducting material, and accordingly can be applied as an ion exchange membrane, a catalyst, and a fuel cell (for example, a catalyst layer for fuel cells, and an electrolyte membrane for fuel cells).

### <3. Production method of ZrSPP using zirconium nanoparticles>

Next, described is an example of a production method of ZrSPP, that is, strongly acidic zirconium particles obtained by using the above-mentioned zirconium nanoparticles.

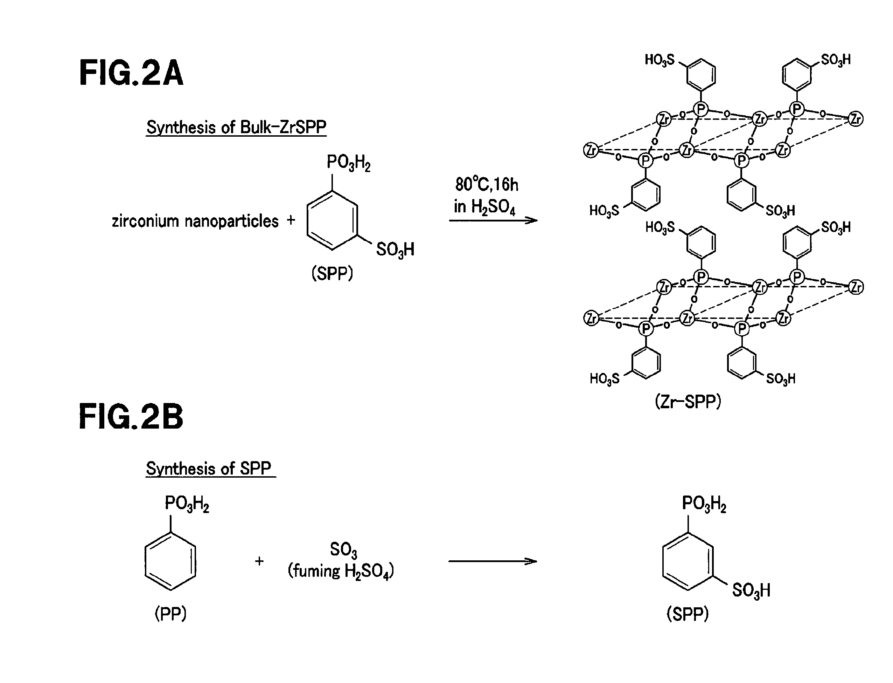

As shown in Fig. 2A, ZrSPP is obtained by adding SPP to zirconium nanoparticles (Zr precursor) and stirring with heating. SPP is obtained by the reaction shown in Fig. 2B (For details, refer to Montoneri, E. et al., Journal of the Chemical Society-Dalton Transcations (1989) 1819).

As for a concentration of SPP to be used for the reaction shown in Fig. 2A, the molar ratio of SPP to zirconium nanoparticles is preferably more than 2. Moreover, a concentration of sulfuric acid is preferably approximately 1 to 2M. Such SPP concentration enables a basic skeleton of ZrSPP to be formed. A stirring time in the reaction shown in Fig. 2A is preferably set to a time allowing the basic skeleton of ZrSPP to be fully formed, for example, not less than 16 hours. A temperature of stirring in the reaction shown in Fig. 2A is preferably not less than 80 degrees C in consideration of forming the basic skeleton of ZrSPP.

In the production method of ZrSPP according to the embodiment, by using zirconium nanoparticles whose particle diameter is set to nano size so as to increase the surface area and accordingly have high reactivity under acid environments, there is not required the energy necessary for the reaction in the direction of the arrow shown in Fig. 2A, for example, a reaction under high temperature condition as in the conventional methods. Thus, ZrSPP can be produced under lower temperature conditions.

Furthermore, according to the production method of ZrSPP of the embodiment, ZrSPP with high proton conductivity can be obtained. Therefore, the ZrSPP obtained by the production method of ZrSPP of the embodiment can achieve improvement in performance as a proton conducting material, and accordingly can be applied as an ion exchange membrane, a catalyst, and a fuel cell (for example, a catalyst layer for fuel cells, and an electrolyte membrane for fuel cells).

### <4. Production method of a zirconium sulfate compound or ZrSPP in a proton conductive polymer>

When the above-mentioned ZrSPP, etc. are used as proton conducting materials for PEFC. From the viewpoint of increase in performance as a proton conducting material, for example, it is desirable to produce a hybrid (composite) material between a zirconium sulfate compound or ZrSPP and a proton conducting polymer.

As the proton conductive polymer, for example, the following sulfonated polymers can be mentioned. That is to say, SPEEK: sulfonated polyetheretherketone, SPEK: sulfonated polyether ketone, SPES: polyether sulfone, SP₃O: poly(2,6-diphenyl-4-phenylene oxide), SPPBP: sulfonated poly(4-phenoxybenzoyl-1,4-phenylene), SPPO: sulfonated polyphenylene oxide or poly(2,6-dimethyl-1,4-phenylene oxide), SPPQ: poly(phenylquinoxaline), SPS: sulfonated polystyrene, SPSF: sulfonated polysulfone, SPSU: sulfonated polysulfone Udel, and perfluorosulfonate polymer (Nafion (registered trademark), etc.) can be mentioned.

A hybrid material of the above-mentioned ZrSPP, etc. and the proton conductive polymer can be produced, for example, by the following procedure.

That is, a proton conducting polymer is dissolved in a first polar organic solvent to obtain a polymer solution. As the first polar organic solvent, for example, N-methylpyrrolidone (NMP), N,N-dimethylformamide (DMF), dimethyl sulfoxide, etc. are used.

Next, the above-mentioned zirconium nanoparticles are dispersed in a second polar solvent to obtain a dispersion of the zirconium nanoparticles. As the second polar organic solvent, N-methylpyrrolidone, N,N-dimethylformamide, dimethyl sulfoxide, etc. are used, as is the case in the first polar organic solvent.

Then, the above-mentioned polymer solution is poured into the above-mentioned dispersion of zirconium nanoparticles, or the dispersion of zirconium nanoparticles is poured into the polymer solution, to obtain a dispersion having a polar organic solvent and a hybrid material.

Then, the first polar organic solvent and the second polar organic solvent are removed from the dispersion having the polar organic solvent and the hybrid material to obtain a hybrid material. Furthermore, the hybrid material is reacted with the sulfuric acid, the sulfuric acid solution pH-adjusted by alkali, or SPP, under the same conditions as in the above-mentioned production method of ZrSPP or the above-mentioned production method of a zirconium sulfate compound, and thereby ZrSPP or a zirconium sulfate compound can be obtained in a proton conducting polymer, that is, a polymer matrix.

Thus, by obtaining ZrSPP or a zirconium sulfate compound in a polymer matrix, ZrSPP or a zirconium sulfate compound can be produced under lower temperature conditions. Consequently, ZrSPP or the zirconium sulfate compound, each having good proton conductivity, can be obtained. Therefore, for example, the ZrSPP or the zirconium sulfate compound obtained in the polymer matrix can be applied as an ion exchange membrane, a catalyst, and a fuel cell (for example, a catalyst layer for fuel cells, and an electrolyte membrane for fuel cells).

### <5. Production method of a zirconium sulfate compound or ZrSPP in a pore-filling membrane>

When the above-mentioned ZrSPP, etc are used as a proton conducting material for PEFC, it is desirable, for example, to produce ZrSPP or a zirconium sulfate compound in a pore-filling membrane, from the viewpoint of increase in performance as a proton conducting material, as described below. The pore-filling membrane is composed of: pores of a porous polymer base material; and a polymer electrolyte such as the above-mentioned proton conducting polymer, etc. and a hybrid material, which are to be filled in the pores.

As the proton conducting polymer, for example, the above-mentioned sulfonated polymer can be mentioned.

As the porous polymer base material, a fluorine resin and a hydrocarbon resin which are excellent in mechanical strength, chemical stability, heat resistance, etc. can be used. As the fluorine resin, polytetrafluoroethylene (PTFE), polychlorotrifluoroethylene (CTFE), polyvinylidene fluoride (PVDF), tetrafluoroethylene-hexafluoropropylene copolymer (FEP), tetrafluoroethylene-perfluoroalkylvinylether copolymer (PFA), tetrafluoroethylene-ethylene copolymer (ETFE), chlorotrifluoroethylene-ethylene copolymer (ECTFE), etc. can be mentioned. Among these fluorine resins, polytetrafluoroethylene (PTFE) and tetrafluoroethylene-hexafluoropropylene copolymer (FEP) are more preferable as the porous polymer base material, from the viewpoint of excellence in mechanical strength, etc., as mentioned above.

As the hydrocarbon resin, polyethylene, polypropylene, polycarbonate, polyimide, polyester, polyether sulfone, polyether ketone, polyetheretherketone, polysulfone, polysulfide, polyamide, polyamidoimide, polyphenylene, polyether, polyetherimide, polyetheramide, heat-resistant cross-linked polyethylene, etc. can be mentioned. Among these hydrocarbon resins, from the viewpoint of thermal stability, polycarbonate, polyimide, polyester, polyether sulfone, polyether ketone, polyetheretherketone, polysulfone, polysulfide, polyamide, polyamideimide, polyphenylene, polyether, polyetherimide, and polyetheramide are more preferable, but not limited thereto.

Note that, as the porous polymer base material, two or more kinds of materials may be used, for example, two or more kinds among the above-mentioned fluorine resins and the above-mentioned hydrocarbon resins may be used.

In addition, from the viewpoint of mechanical strength, etc, the porous polymer base material preferably has a membrane thickness of 0.01 to 300 µm, preferably 0.1 to 100 µm, a porosity of 10 to 95%, more preferably 40 to 90%, a breaking strength of not less than 1.961 × 10⁴ kPa (200 kg/cm²), and an average through-pore diameter of 0.001 1 to 100 µm.

For example, by forming ZrSPP or a zirconium sulfate compound in a pore-filling membrane according to the following procedure, a proton conducting membrane in which a zirconium sulfate compound or ZrSPP and a proton conducting polymer are fixed to a porous polymer base material (pore-filling membrane) can be produced.

First, a proton conducting polymer is dissolved in the above-mentioned first polar organic solvent to obtain a polymer solution. Next, zirconium nanoparticles are dispersed in the above-mentioned second polar solvent to obtain a dispersion of the zirconium nanoparticles. Next, the above-mentioned polymer solution is poured into the dispersion of zirconium nanoparticles, or the dispersion of zirconium nanoparticles is poured into the polymer solution, to obtain a dispersion having the polar organic solvents and a hybrid material. Next, pores of the porous polymer base material are impregnated with the dispersion having the polar organic solvents and the hybrid material, and after the impregnation, the solvents are removed by drying to produce a pore-filling membrane in which the dispersion having the polar organic solvents and the hybrid material is filled in the pores of the porous polymer base material and fixed thereto (electrolyte membrane). Then, the pore-filling membrane is reacted with sulfuric acid, a sulfuric acid solution pH-adjusted by alkali, or SPP, under the same conditions as in the above-mentioned production method of ZrSPP or the above-mentioned production method of a zirconium sulfate compound, to obtain a proton conducting membrane in which ZrSPP or a zirconium sulfate compound and the proton conducting polymer are fixed to a porous polymer base material.

Thus, by forming ZrSPP or a zirconium sulfate compound in a pore-filling membrane, ZrSPP or a zirconium sulfate compound can be produced under lower temperature conditions. Consequently, ZrSPP or a zirconium sulfate compound each of which has good proton conductivity can be obtained. Furthermore, the proton conducting membrane in which ZrSPP or a zirconium sulfate compound and a proton conducting polymer are fixed to a porous polymer base material has high conductivity, high mechanical stability, high chemical stability, etc., under the conditions of a wide temperature range (for example, -30 to 120 degrees C) and a lower humidity (for example, not more than 50% relative humidity). Therefore, the proton conducting membrane can be applied as, for example, an ion exchange membrane, a catalyst, and a fuel cell (for example, a catalyst layer for fuel cells, and an electrolyte membrane for fuel cells).

Note that, in the embodiment, sulfuric acid, a sulfuric acid solution pH-adjusted by alkali, or SPP is mentioned as a substance to react with zirconium nanoparticles, but, besides those, for example, sulfonic acid which can form a basic skeleton of a zirconium sulfate compound can be used.

### <6. Membrane Electrode Assembly >

A membrane electrode assembly (membrane electrode complex (MEA)) according to the embodiment comprises the above-mentioned proton conducting membrane (hereinafter referred to as "electrolyte membrane") and an electrode disposed at least one surface of the electrolyte membrane or both surfaces of the electrolyte membrane.

### (6-1) Electrode

An electrode comprises a gas diffusion layer and a catalyst layer, the catalyst layer disposed at least one of on and inside the gas diffusion layer.

### (6-1-1) Gas diffusion layer

As the gas diffusion layer, a known substrate having gas permeability, such as carbon fiber woven fabric, carbon paper, etc., can be used. Preferably, substrates obtained by making these substrates, etc. water-repellent are used. The water-repellent finishing is performed by, for example, soaking these substrates in an aqueous solution of a water-repellent agent composed of fluorine resins, such as polytetrafluoroethylene and tetrafluoroethylene-hexafluoropropylene copolymer, or the like, and then drying and calcining.

### (6-1-2) Catalyst layer

As a catalyst substance used for the catalyst layer, for example, platinum-group metals, such as platinum, rhodium, ruthenium, iridium, palladium, osmium, etc. and the alloys thereof are preferable. Furthermore, as the catalyst substance used for the catalyst layer, these catalyst substances and the salts of the catalyst substances may be used alone or mixed to be used. Moreover, in order to secure good proton conductivity even inside the catalyst layer, carbon fine particles on which the catalyst substances are supported, and the above-mentioned proton conducting material (ZrSPP, a zirconium sulfate compound, and ZrSPP or a zirconium sulfate compound obtained in the proton conducting polymer) and a polyelectrolyte and/or an oligomer electrolyte are preferably used in combination.

From the viewpoint of suitable size to have high catalytic activity, a mean particle diameter of the catalyst is preferably 0.5 to 20 nm, but not particularly limited thereto.

Although depending on an adhesion method, etc., it is appropriate that the catalyst is adhered on the surface of the gas diffusion layer, for example, at an amount range of approximately 0.02 to approximately 20 mg/cm², preferably approximately 0.02 to 20 mg/cm². Moreover, it is appropriate that, for example, the catalyst exists in an amount of 0.01 to 10% by weight, preferably 0.3 to 5% by weight, with respect to the total amount of electrodes.

### (6-2) Method for producing a membrane electrode assembly

A membrane electrode assembly is produced, for example, by disposing the above-mentioned electrode on an electrolyte membrane.

As a method for producing a membrane electrode assembly, for example, a method for applying an electrode material directly on an electrolyte membrane can be mentioned, the electrode material containing a catalyst substance and a gas diffusion layer material.

More specifically, as the catalyst substance, catalyst supporting carbon particles which support catalyst substances, such as platinum-ruthenium (Pt-Ru) and platinum (Pt), are used, and the catalyst substance is mixed with a solvent to produce paste. As the solvent, a polar solvent can be mentioned, such as alcohol with a carbon number of 1 to 6, glycerol, ethylene carbonate, propylene carbonate, butyl carbonate, ethylene carbamate, propylene carbamate, butylene carbamate, acetone, acetonitrile, dimethylformamide, dimethylacetamide, 1-methyl-2-pyrrolidone, sulfolane, etc. The organic solvent may be used alone or as a mixed solution with water. A viscosity of the paste is preferably adjusted to a range of 0.1 to 1000 Pa·s. This viscosity can be adjusted by selecting each particle diameter, adjusting a water content, and adding a viscosity modifier, etc. As the viscosity modifier, for example, carboxymethylcellulose, methylcellulose, polyethylene glycol, polyvinyl alcohol, polyvinylpyrrolidone, sodium polyacrylate polymethyl vinyl ether, etc. can be mentioned. Furthermore, in consideration of gas diffusibility, the paste may be produced by mixing the above-mentioned catalyst substance with a water repellent agent such as polytetrafluoroethylene (PTFE) particles to be used for producing the gas diffusion layer.

Next, a membrane-forming is performed by applying or spraying the above-mentioned paste directly on the electrolyte membrane, and subsequently the obtained membrane is dried by heating to form a catalyst layer (including a water-repellent layer which is a part of the gas diffusion layer if a water repellent agent is included) on the polyelectrolyte. As a method for membrane-forming of a paste on an electrolyte membrane, there can be mentioned a method in which a paste for catalyst layer formation is applied to one side of an electrolyte membrane, at least one time, preferably approximately 1 to 5 times, by preferably using screen printing, a roll coater, a comma coater, etc., and subsequently the paste is applied to the other side in the same manner, and then dried. Note that, as the paste for catalyst layer formation, the proton conducting material according to the above-mentioned embodiment, its precursor (a hybrid material composed of zirconium nanoparticles and a proton conductive polymer), or a polyelectrolyte and/or an oligomer electrolyte (ionomer) may be mixed. For example, as mentioned-above, if a precursor of a proton conducting material is added to a paste for catalyst layer formation, a proton conducting material can be produced by acid treatment after forming the catalyst layer.

Next, a gas diffusion layer which is arbitrarily made water-repellent is heat-pressed on the catalyst layer to produce a membrane electrode assembly. It is appropriate that a thickness of the catalyst layer is, for example, 0.1 to 1000 µm, preferably 1 to 500 µm, more preferably 2 to 50 µm. Note that, after forming a catalyst layer on a gas diffusion layer base material by using screen printing, a roll coater, etc., the catalyst layer may be joined to an electrolyte membrane by heat-pressing, etc.

### <7. Fuel cell>

For a fuel cell according to the embodiment, the above-mentioned membrane electrode assembly is used. As the fuel cell of the present invention, a polymer electrolyte fuel cell (PEFC) and a direct methanol fuel cell (DMFC) can be mentioned.

In addition, a method for producing the fuel cell according to the embodiment comprises a step of obtaining a membrane electrode assembly by interposing the above-mentioned electrolyte membrane between two electrodes.

More specifically, for example, a catalyst layer is made adhered on each of the surfaces of the electrolyte membrane, in addition, two polar plates of an anode pole and a cathode pole are disposed on or sandwiched between each surface of the membrane electrode assembly having the gas diffusion layer, and a stack is obtained. In one face of the obtained stack, disposed is a fuel room which can maintain atmospheric-pressure or pressurized hydrogen gas, or pressurized methanol gas or a methanol aqueous solution. In the other face of the stack, a gas room which can maintain atmospheric-pressure or pressurized oxygen or air is disposed to produce a fuel cell. The fuel cell produced in this manner extracts electrical energy which generates by reacting hydrogen or methanol with oxygen.

Moreover, in the fuel cell according to the embodiment, in order to extract necessary electric power, a membrane electrode assembly or a stack is regarded as one unit and many of the units may be arranged in series or in parallel.

### Example

Hereinafter, concrete examples of the present invention will be described. Note that the present invention is not limited to the following examples.

### <Example 1>

In Example 1, a dilution solution of zirconium alkoxide (0.05 M) was prepared with isopropyl alcohol (IPA). Acetylacetone as a chelating agent was added dropwise to the zirconium alkoxide solution, and stirred for 30 minutes. A concentration ratio of zirconium to acetylacetone in the zirconium alkoxide was 1:2. The 1 M nitric acid solution as a catalyst was added to the above-mentioned zirconium alkoxide solution, and stirred for 6 hours to obtain zirconia sol. The zirconia sol was dried by a dryer at 80 degrees C for not less than 12 hours to obtain zirconium nanoparticles. The obtained zirconium nanoparticles were mixed with a SPP sulfuric acid solution, and heated at 80 degrees C. A molar ratio of the SPP to the zirconium nanoparticles was 2, and the sulfuric acid concentration was 1.5 M. After reaction, the solvent was removed and the sample was dried, then the dried sample was washed by isopropyl alcohol and purified to obtain ZrSPP.

### <Example 2>

In Example 2, 0.2 g of the zirconium nanoparticles obtained in Example 1 was added to 2 ml of 1.5 M sulfuric acid and stirred at 80 degrees C for 16 hours, and thereafter dried by a dryer at 80 degrees C.
Next, the dried sample was washed by isopropyl alcohol and purified to obtain a zirconium sulfate compound.

### <Example 3>

Example 3 was carried out as in Example 2, except that the sulfuric acid treatment was performed at 40 degrees C.

### <Example 4>

Example 4 was carried out as in Example 2, except that the sulfuric acid treatment was performed at 60 degrees C.

### <Example 5>

Example 5 was carried out as in Example 2, except that the sulfuric acid treatment was performed at 150 degrees C.

### <Example 6>

Example 6 was carried out as in Example 2, except that the sulfuric acid treatment was performed by using 1.0 M sulfuric acid.

### <Example 7>

Example 7 was carried out as in Example 2, except that the sulfuric acid treatment was performed by using 2.0 M sulfuric acid.

### <Example 8>

Example 8 was carried out as in Example 2, except that the sulfuric acid treatment was performed by using 3.0 M sulfuric acid.

### <Example 9>

In Example 9, 0.2 g of the zirconium nanoparticles obtained in Example 1 was mixed with 2 ml of 1.5 M ammonium sulfate ((NH₄)₂SO₄) aqueous solution (pH = 7) (S/Zr = 3.6) and stirred for 1 hour, and thereafter reacted for 16 hours with drying at 80 degrees C by a high temperature bath. The dried sample was washed by methanol and purified to recover a zirconium sulfate compound.

### <Example 10>

In Example10, 0.2 g of the zirconium nanoparticles obtained in Example 1 was mixed with 2 ml of 1.5 M ammonium sulfate ((NH₄)₂SO₄) aqueous solution (pH = 3) (S/Zr = 3.6) and stirred for 1 hour, and thereafter reacted for 16 hours with drying at 80 degrees C by a high temperature bath. The dried sample was washed by methanol and purified to recover a zirconium sulfate compound.

### <Example 11>

In Example 11, an NaOH aqueous solution was added to a sulfuric acid aqueous solution to adjust pH to 1 to 3, thereafter the sulfuric acid aqueous solution was adjusted so as to have 1.5 M sulfate ion concentration (S/Zr = 3.6). Then, 2 ml of the obtained sulfuric acid solution and 0.2 g of the zirconium nanoparticles obtained in Example 1 were mixed, and stirred for 1 hour, then reacted for 16 hours, with drying at 80 degrees C in a high temperature bath. The dried sample was washed by DMF and methanol and purified to recover a zirconium sulfate compound.

### <Example 12>

In Example 12, the zirconium nanoparticles obtained in Example 1 was incorporated into sulfonated polyether sulfone (SPES) to perform synthesis of a proton conducting hybrid material. A polymer was dissolved in an organic polar solvent, that is, N-methylpyrrolidone, to produce a SPES solution of 10% by weight. Powders of the zirconium nanoparticles were dissolved in an organic polar solvent (NMP) to prepare a zirconium nanoparticle solution of 10% by weight. A mixed solution was prepared by mixing a SPES solution and the zirconium nanoparticle solution in a weight ratio of 1:1. The mixed solution was casted on a hot plate at 100 degrees C, and thereafter vacuum-dried at 80 degrees C overnight to prepare a self-standing hybrid film (Zr-SPES cast membrane). The obtained Zr-SPES cast membrane was mixed with a SPP sulfuric acid solution and heated at 80 degrees C so that the zirconium nanoparticles homogeneously dispersed in the SPES polymer matrix would transformed into ZrSPP. Here, a molar ratio of SPP to zirconium nanoparticles in the membrane was made not less than 2, and a concentration of the sulfuric acid was made 1.5 M.

### <Example 13>

In Example 13, a porous base material (heat-resistant cross-linked polyethylene base material) was filled in with the mixed solution, which was prepared in Example 12 by mixing a SPES solution with a zirconia nanoparticle solution in a weight ratio of 1:1, to prepare a Zr-SPES pore-filling membrane. The obtained Zr-SPES pore-filling membrane was mixed with a SPP sulfuric acid solution, and heated at 80 degrees C. Here, a molar ratio of SPP to zirconium nanoparticles in the membrane was made not less than 2, and a concentration of the sulfuric acid was made 1 M.

### <Example 14>

Example 14 was carried out as in Example 13, except that a concentration of the sulfuric acid was made 1.5 M.

### <Example 15>

In Example 15, a SPES solution of 10% by weight and a zirconium nanoparticle solution of 10% by weight were prepared as in Example 12, except that N,N-dimethylformamide (DMF) was used as an organic polar solvent. A Zr-SPES pore-filling membrane was prepared by filling in a porous base material (heat-resistant cross-linked polyethylene base material) with the mixed solution obtained by mixing the prepared SPES solution with the prepared zirconium nanoparticle solution in a weight ratio of 1:1. The obtained Zr-SPES pore-filling membrane was mixed with a SPP sulfuric acid solution and heated at 80 degrees C to obtain a ZrSPP-SPES pore-filling membrane. Here, a molar ratio of SPP to zirconium nanoparticles in the membrane was made not less than 2, and a concentration of the sulfuric acid was made 1.5 M.

### <Example 16>

In Example 16, a membrane electrode assembly was produced by using the ZrSPP-SPES pore-filling film produced in Example 15.

### (1) Production of a diffusion layer

With the following procedure, a diffusion layer was formed on a carbon paper (carbon paper made by TORAY INDUSTRIES, INC., EC-TP1-060T). A fluorine-treated carbon paper was cut to 3 cm × 3 cm. To a beaker of 30 ml, 0.37 g of XC-72 and 4.0 g of isopropanol (IPA) were added, and mixed by ultrasonication or stirring until a viscosity suitable for printing was obtained. Then, 0.140 g of a polytetrafluoroethylene (PTFE) solution is added to the beaker and stirred for approximately 1 minute to produce a paste for diffusion layer production. Subsequently, the paste for diffusion layer production is applied on the carbon paper by screen printing to obtain a diffusion layer. Then, in a muffle furnace, the produced diffusion layer was calcined at 280 degrees C for 2 hours, and further calcined at 350 degrees C for 2 hours.

### (2) Production of a catalyst layer

In Example 16, a SPES solution of 5% by weight and a zirconium nanoparticle solution of 5% by weight were first prepared as in Example 12, except that DMF was used as an organic polar solvent. The prepared SPES solution and the prepared zirconium nanoparticle solution were mixed in a weight ratio of 1:1 to obtain a mixed solution. Then, 1.0 g of the prepared mixed solution (capping solution) was added to 0.12 g of a platinum-supported carbon of 46.5% by mass (Pt: 46.5% (made by TANAKA KIKINZOKU KOGYO K.K., TEC10E50E)), and mixed by stirring to obtain a paste for catalyst layer formation. Subsequently, the paste for catalyst layer formation was applied on the produced carbon paper having a diffusion layer by screen printing in 2 applications to produce an electrode (capping electrode). The produced electrode was dried at room temperature for approximately 1 hour, then vacuum-dried at 80 degrees C for 12 hours.

### (3) Acid treatment of a capping electrode

By using a 1.5 M SPP sulfuric acid solution, the capping electrode was acid-treated at 80 degrees C for 16 hours. The acid-treated capping electrode was washed by RO (Reverse Osmosis) water of approximately 60 degrees C for approximately 8 hours.

### (4) Production of a capping membrane electrode assembly (capping MEA)

The capping pore-filling membrane obtained in Example 15 and the capping electrode produced by the above-mentioned method were joined by using a hotpress to produce an MEA. The joining conditions were the following two steps. A first step was performed for 1 minute under conditions of 80 degrees C and 2.21 kN. A second step was performed for 1 minute under conditions of 120 degrees C and 2.21 kN. An amount of catalyst supported on the capping electrode was 0.3 mg-Pt/cm² at an anode and a cathode.

### <Reference Example 1>

In Reference Example 1, a SPES solution of 10% by weight was prepared by using N,N-dimethylformamide (DMF) as an organic polar solvent, and the SPES solution of 10% by weight was filled in a porous base material (heat-resistant cross-linked polyethylene base material) to prepare a SPES pore-filling membrane.
Table 1 summarizes Examples 1 to 16 and Reference Example 1.

**[Table 1]**

| | Reaction reagent | Sulfuric acid concentration (M) | Reaction temperature (°C) |
|---|---|---|---|
| Example 1 | SPP | 1.5 | 80 |
| Example 2 | H₂SO₄ | 1.5 | 80 |
| Example 3 | H₂SO₄ | 1.5 | 40 |
| Example 4 | H₂SO₄ | 1.5 | 60 |
| Example 5 | H₂SO₄ | 1.5 | 150 |
| Example 6 | H₂SO₄ | 1.0 | 80 |
| Example 7 | H₂SO₄ | 2.0 | 80 |
| Example 8 | H₂SO₄ | 3.0 | 80 |
| Example 9 | (NH₄)₂SO₄solution (pH=7) | 1.5 | 80 |
| Example 10 | (NH₄)₂SO₄solution (pH=3) | 1.5 | 80 |
| Example 11 | H₂SO₄+NaOHsolution (pH=1∼3) | 1.5 | 80 |
| Example 12 | SPP+SPES (Cast membrane) | 1.5 | 80 |
| Example 13 | SPP+SPES (Filling membrane) | 1.0 | 80 |
| Example 14 | SPP+SPES (Filling membrane) | 1.5 | 80 |
| Example 15 | SPP+SPES (Filling membrane) | 1.5 | 80 |
| Example 16 | Electrolyte membrane: Example 15 Electrode : (ZrSPP + SPES) | 1.5 | 80 |
| Reference Example 1 | SPES (Filling membrane) | - | - |

Hereinafter, an evaluation test of Example 1 will be described as Evaluation Test 1, an evaluation test of Examples 2 to 11 as Evaluation Test 2, an evaluation test of Examples 12 to 15 and Reference Example 1 as Evaluation Test 3, and an evaluation test of Example 16 as Evaluation Test 4.

### <7. Evaluation Test>

### · Evaluation Test 1

### [Evaluation of zirconium nanoparticles]

A particle diameter of the zirconium nanoparticles obtained in Example 1 was measured in NMP by dynamic light scattering (DLS). As a measuring apparatus, Zetasizer Nano S90 (made by SYSMEX CORPORATION) was used. The zirconium nanoparticles synthesized in Example 1 were dispersed in NMP, and the particle diameter was confirmed to be 2 nm by dynamic-light-scattering.

### [SEM observation]

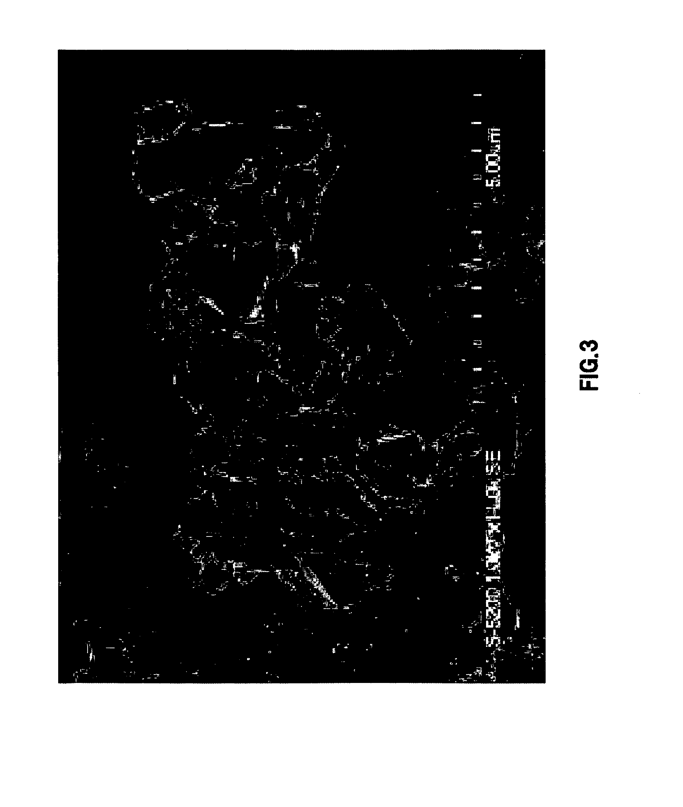

In Example 1, from the result of SEM photography shown in Fig. 3, the particle diameter of the obtained ZrSPP particles can be confirmed to be several micrometers to tens of micrometers.

### [XRD measurement]

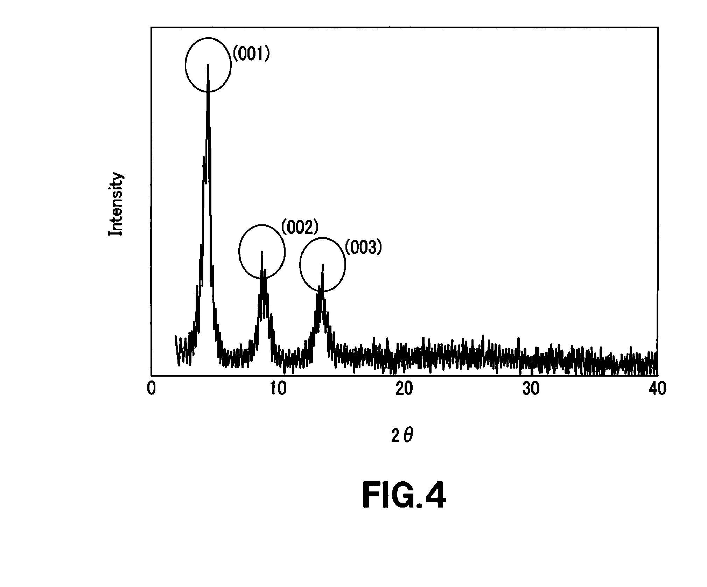

As for the ZrSPP obtained in Example 1, from the results of XRD measurements shown in Fig. 4, each peak of Face (001), Face (002), and Face (003) can be observed at 4.8°, 9.5°, and 13.8° on the horizontal axis (20), respectively. From the results of XRD measurements shown in Fig. 4, it is found that the peaks of Face (001), Face (002), and Face (003) are derived from ZrSPP (Refer to E. W. Stein, et al., Solid State Ionics 83 (1996) 113).

### [FT-IR measurement]

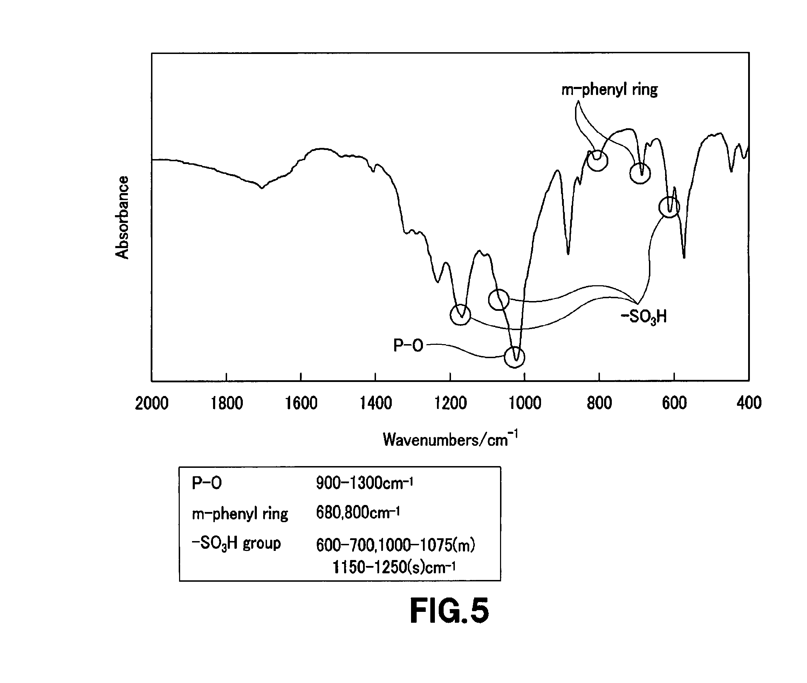

As for the ZrSPP obtained in Example 1, from the results of FT-IR measurements shown in Fig. 5, the peak of P-O bond can be observed around 900 to 1300 cm⁻¹. Furthermore, as for the ZrSPP obtained in Example 1, the peaks of benzene ring at meta position can be observed around 680 cm⁻¹ and around 800 cm⁻¹. Furthermore, as for the ZrSPP obtained in Example 1, the peaks of S=O bond or S-O bond can be observed around 600 to 700 cm⁻¹, around 1000 to 1075 cm⁻¹, and around 1150 to 1250 cm⁻¹. Thus, from the results of the FT-IR measurements shown in Fig. 5, it is found that a SPP group was introduced into the zirconium nanoparticle in Example 1.

Therefore, from the results shown in Fig. 4 and Fig. 5, it can be confirmed that, in Example 1, ZrSPP can be synthesized at a temperature lower than in the conventional method for producing ZrSPP.

### [Heat-resistance evaluation]

As a heat-resistance evaluation for the ZrSPP obtained in Example 1, TGA measurements (thermogravimetric analysis), TG-MS measurements, and XRD measurements were performed.

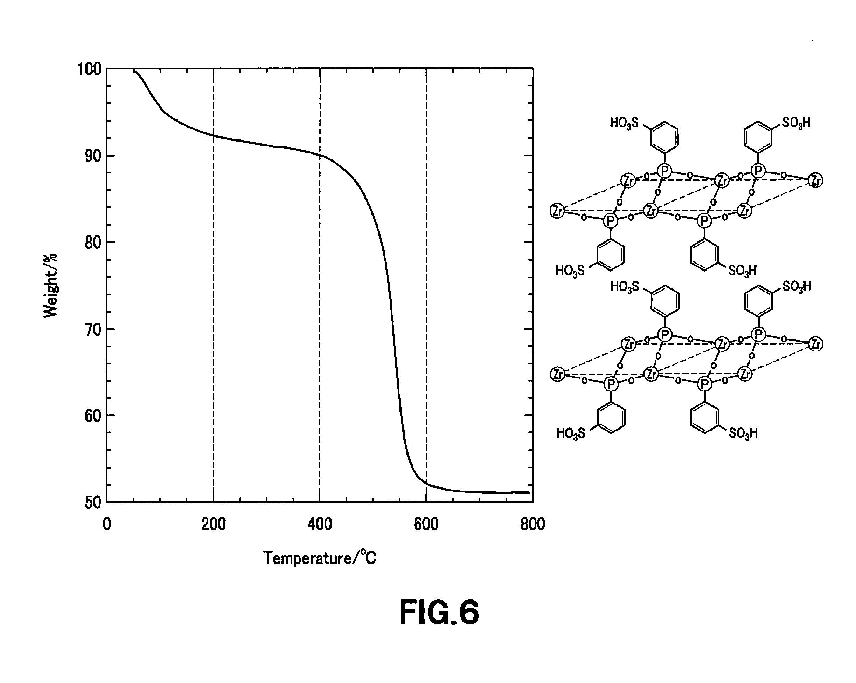

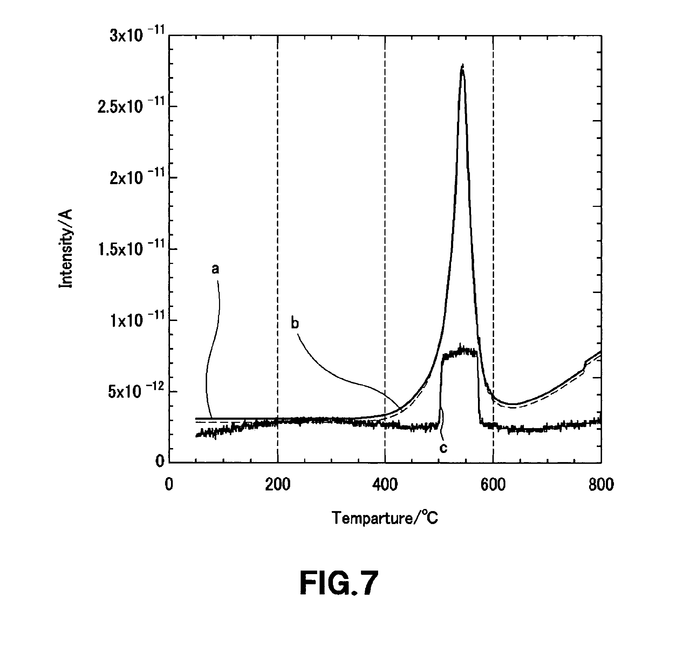

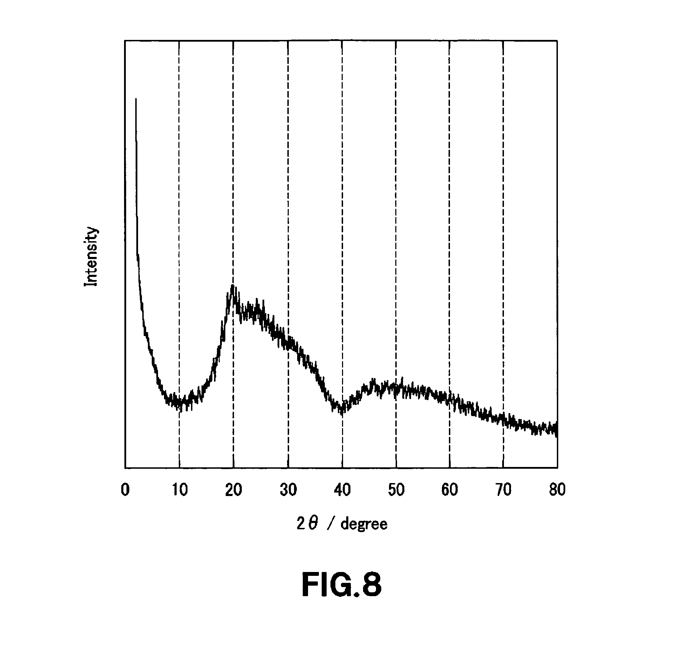

From the results of the TGA measurements shown in Fig. 6, it can be confirmed that a heat-resistance of the ZrSPP obtained in Example 1 is approximately 400 degrees C. Moreover, from the results of TG-MS measurements shown in Fig. 7, it can be confirmed that a sulfuric acid group (SO₃H) of the ZrSPP obtained in Example 1 is cracked at a temperature of around 500 degrees C. Here, in Fig. 7, a, b, and c represent m/z (SO) = 48, m/z (SO₂) = 64, and m/z (SO₃) = 80, respectively. Moreover, in Example 1, from the results of XRD measurements shown in Fig. 8 performed after the TGA measurements shown in Fig. 6, a structure of the ZrSPP can be confirmed to be an amorphous structure.

### [Proton conductivity evaluation]

A proton conductivity evaluation of a sample obtained in Example 1 was performed by impedance measurements. More specifically, the sample obtained in Example 1 was made into a pellet form by a KBr tablet forming machine, and then, platinum electrodes to which platinum paste was applied were attached to both ends in the thickness direction of the sample in a pellet form, and sandwiched with glass plates to measure by a two-terminal method. The temperatures of the measurements of proton conductivity were 90 degrees C, 80 degrees C, and 70 degrees C, and the relative humidity (RH) was varied from 20 to 80%.

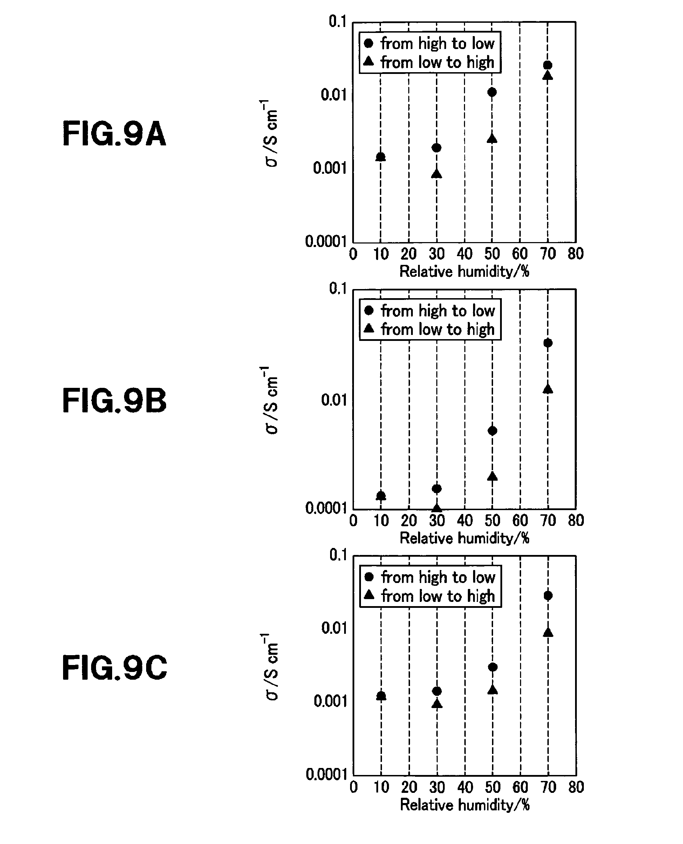

In Figs. 9A to 9C, circle marks show the results when the impedance measurements were performed at high to low humidity, and triangle marks show the results when the impedance measurement were performed at low to high humidity. In Example 1, the results shown in Figs. 9A, 9B, and 9C were obtained when the measurement temperatures were 90 degrees C, 80 degrees C, and 70 degrees C, respectively. In other words, as illustrated in Figs. 9A to 9C, the sample obtained in Example 1 showed not less than 0.01 S/cm of σ values on the vertical axis at a relative humidity of 80% on the horizontal axis in a temperature range of 90 to 70 degrees C. Therefore, since the sample obtained in Example 1 shows the proton conductivity equivalent to ZrSPP obtained by the conventional methods, the sample can be confirmed to be applicable as a proton conductor (Refer to the above-mentioned Non Patent Literature 1).

### [Hot water resistance test]

In order to examine hot water resistance of the sample obtained in Example 1, a hot water resistance test was performed at 150 degrees C by using a pressure-resistant hot clave (TVS-1, TAIATSU TECHNO Corporation).

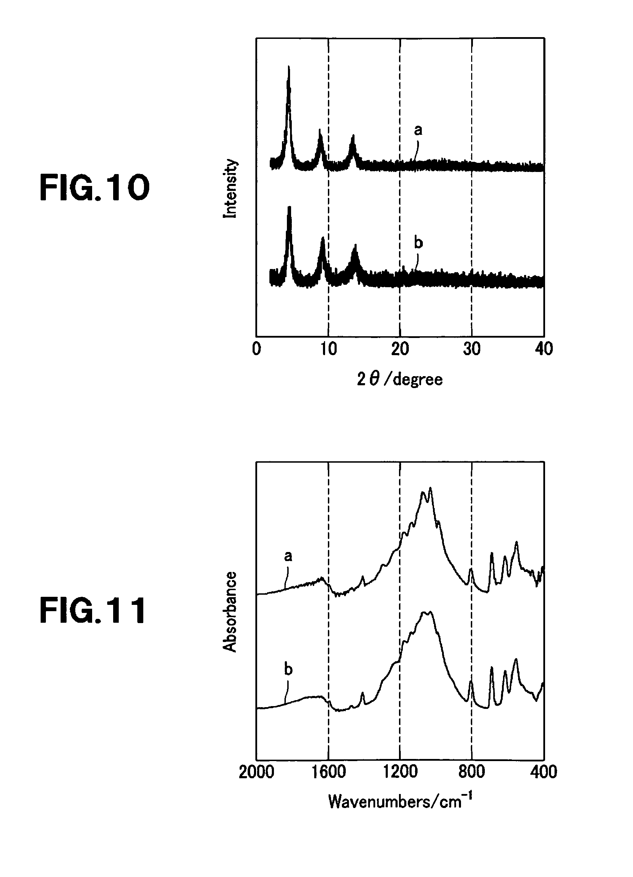

In the results of XRD measurements before and after a hot water resistance test shown in Fig. 10, and the results of FT-IR measurements before and after a hot water resistance test shown in Fig. 11, a and b represent the measurement results before and after the hot water resistance test, respectively. From the results shown in Figs. 10 and 11, no change was observed in the sample obtained in Example 1 before and after the hot water resistance test. Moreover, the hot water resistance test is an accelerated test at higher temperature and higher pressure than in usual fuel cell tests. Therefore, it is found that the sample obtained in Example 1 is stable under fuel cell test conditions.

### [Fenton's test]

In order to examine radical resistance of the sample obtained in Example 1, Fenton's test, that is, a radical accelerated aging test was performed. More specifically, approximately 0.1 g of the sample obtained in Example 1 and 4.9 ml of an H₂O₂ solution of 3% by weight containing 5 ppm FeSO₄ were added to a sample bottle to produce a sample solution including the sample of 2% by weight obtained in Example 1. The sample bottle containing the sample solution is placed into an oil bath of 60 degrees C, and the sample solution was reacted by stirring for the predetermined time. As a quenching agent, isopropyl alcohol was added in an excessive amount and stirred. After stirring, the sample solution was sufficiently dried at 80 degrees C.

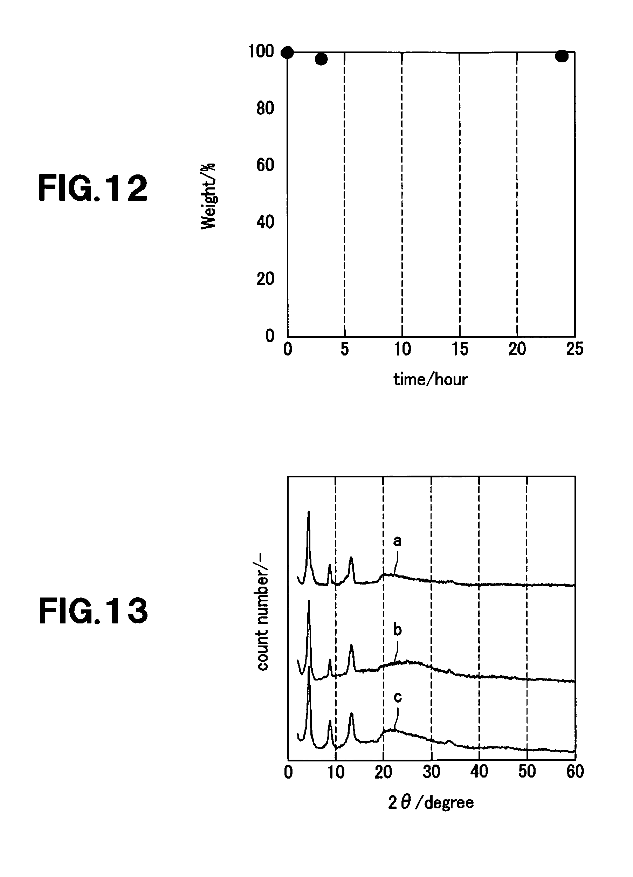

From the change in weight of ZrSPP after Fenton's test shown in Fig. 12, it is found that, in the sample obtained in Example 1, difference in mass between before and after Fenton's test was hardly observed. Moreover, from the results of XRD measurements before and after Fenton's test shown in Fig. 13, no difference was observed in the sample obtained in Example 1. Note that, in Fig. 13, a, b, and c show the results of XRD measurements performed 24 hours after Fenton's test, 3 hours after Fenton's test, and before Fenton's test, respectively. Therefore, it is found that the sample obtained in Example 1 is stable to a radical.

### · Evaluation Test 2

### [SEM observation]

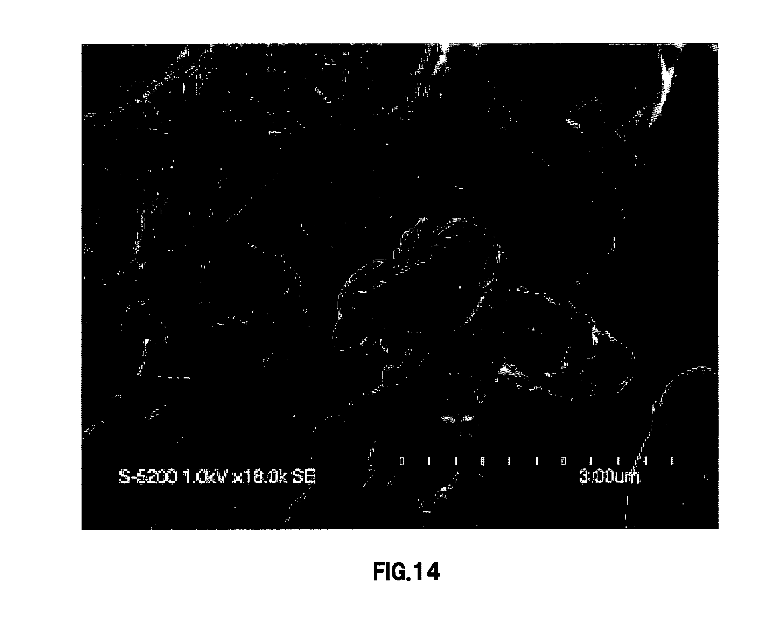

In Example 2, from the results of a SEM observation shown in Fig. 14, it can be confirmed that a particle diameter of the obtained particles is from several micrometers to tens of micrometers.

### [XRD measurement]

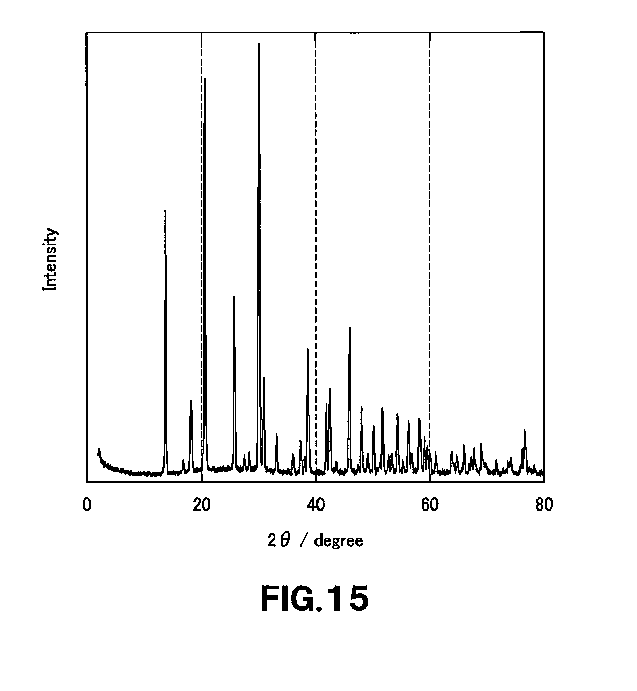

In Example 2, since the results of XRD measurements shown in Fig. 15 mostly coincides with the XRD pattern of Zr(SO₄)₂ (Refer to J. C. Juan, et al., Journal of Molecular Catalysis A: Chemical 272 (2007) 91.), it can be confirmed that the obtained sample is Zr(SO₄)₂.

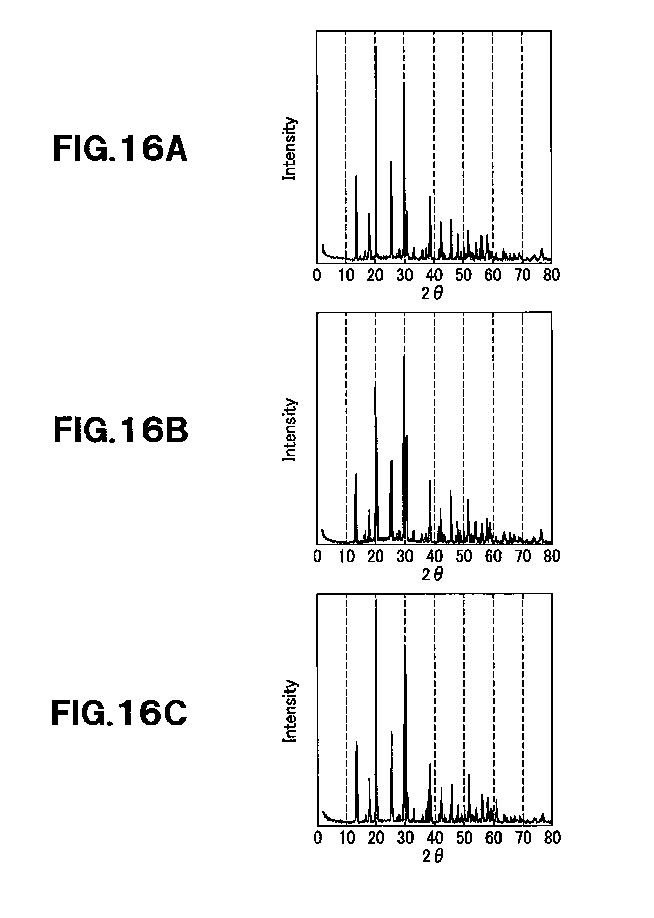

Next, Figs. 16A, 16B, and 16C show the results of XRD measurements in the case where sulfuric acid concentrations used for sulfuric acid treatments are 1.0 M (Example 6), 2.0 M (Example 7), and 3.0 M (Example 8), respectively. As shown in Figs. 16A to 16C, it can be confirmed that the XRD patterns in Examples 6 to 8 are almost the same as Example 2 wherein a sulfuric acid concentration used for sulfuric acid treatment is set to 1.5 M. From the results shown in Figs. 16A to 16C, it is found that, in Example 2, there is little influence by sulfuric acid concentration when performing the sulfuric acid treatment.

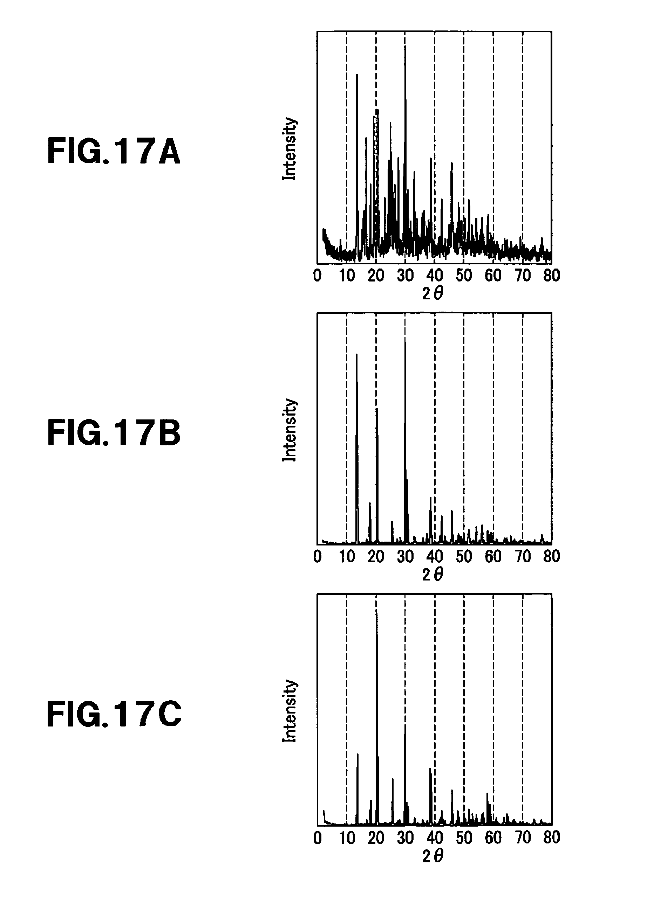

Moreover, Figs. 17A, 17B, and 17C show the results of XRD measurements in the case where the temperatures of sulfuric acid treatments are 150 degrees C, 60 degrees C, and 40 degrees C, respectively. As shown in Figs. 17A to 17C, it can be considered that, in Examples 3 and 4, the samples have a crystal structure of Zr(SO₄)₂ at a temperature of not more than 80 degrees C, as in the results of Example 2. On the other hand, Example 5 is different in behavior from Examples 3 and 4, and many different peaks can be confirmed in Example 5.

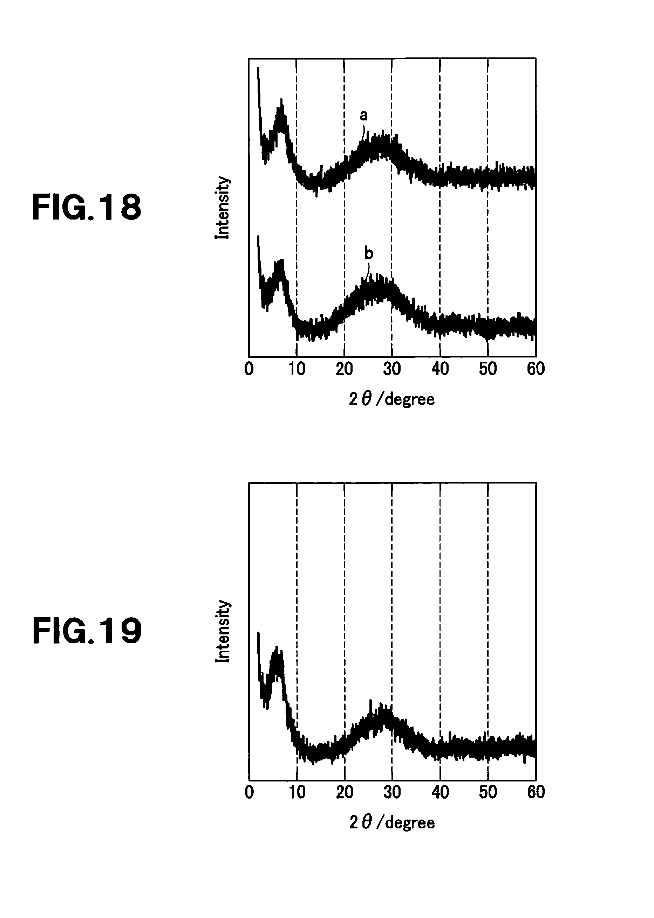

In Fig. 18, a and b show the results of XRD measurements in Examples 9 and 10, respectively, and Fig. 19 shows the results of XRD measurements in Example 11. From the results of XRD measurements shown in Figs. 18 and 19, it is indicated that the samples obtained in Examples 9 to 11 have a crystal structure different from Zr(SO₄)₂. Moreover, as shown in the results of XRD measurements shown in Figs. 18 and 19, the samples obtained in Examples 9 to 11 have a low-crystalline ZrO₂ skeleton.

### [FT-IR measurement]

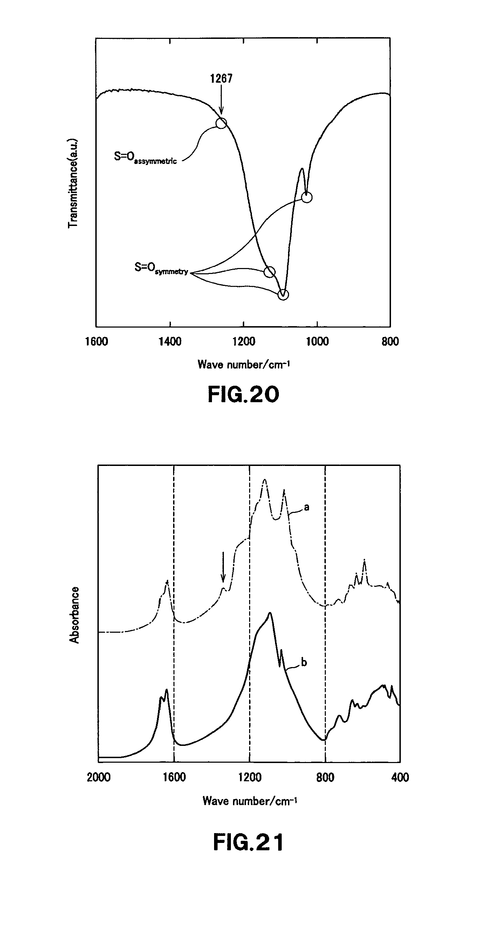

In Example 2, from the results of FT-IR measurements shown in Fig. 20, S=O_{assymmetric} bond can be observed around 1267 cm⁻¹, and peaks of S=O_{symmetry} bond can be observed around 1000 to 1100 cm⁻¹. In Examples 3 and 5, the results of FT-IR measurements shown in Fig. 21 were obtained. In Fig. 21, a and b show the results of FT-IR measurements in Examples 5 and 3, respectively. In Example 5, a peak can be observed at a position of 1337 cm⁻¹. The peak represents an asymmetric stretching of S=O (Refer to the above-mentioned Non Patent Literature 2.). In other words, since an asymmetric stretching of S=O was observed at a position of 1337 cm⁻¹ in Example 5, it can be confirmed that SZrO₂ is included in Example 5. Furthermore, from the results of FT-IR measurements shown in Fig. 21, a peak of water adsorption can be observed around 1630 cm⁻¹ in Examples 3 and 5. From this result, it was confirmed that Zr(SO₄)₂ is included also in the crystal of Example 5.

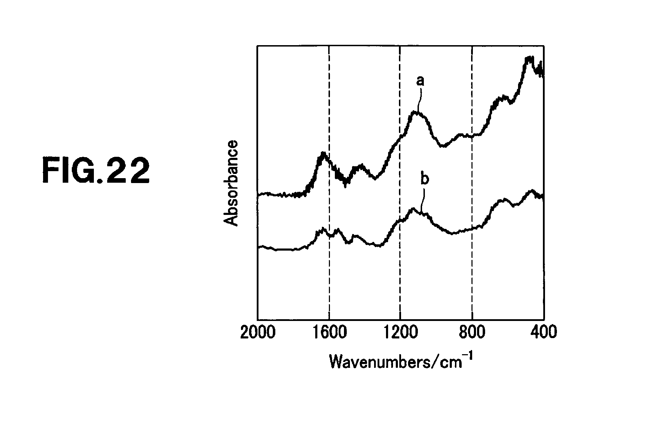

In Fig. 22, a and b show the results of FT-IR measurements in Examples 9 and 10, respectively. In the samples obtained in Examples 9 and 10, from the results of FT-IR measurements shown in Fig. 22, peaks which can be considered to be derived from a sulfonic acid group were observed around 1400 cm⁻¹ and around 1100 cm⁻¹ as a result of reaction of zirconium nanoparticles with a ammonium sulfate solution. These peaks coincide with the FT-IR measurement results of a SZrO₂ sample obtained by heating Zr(SO₄)₂ according to a past report (E. Escalona Platero, et al., Catalysis Letters 30 (1995) 31 to 39).

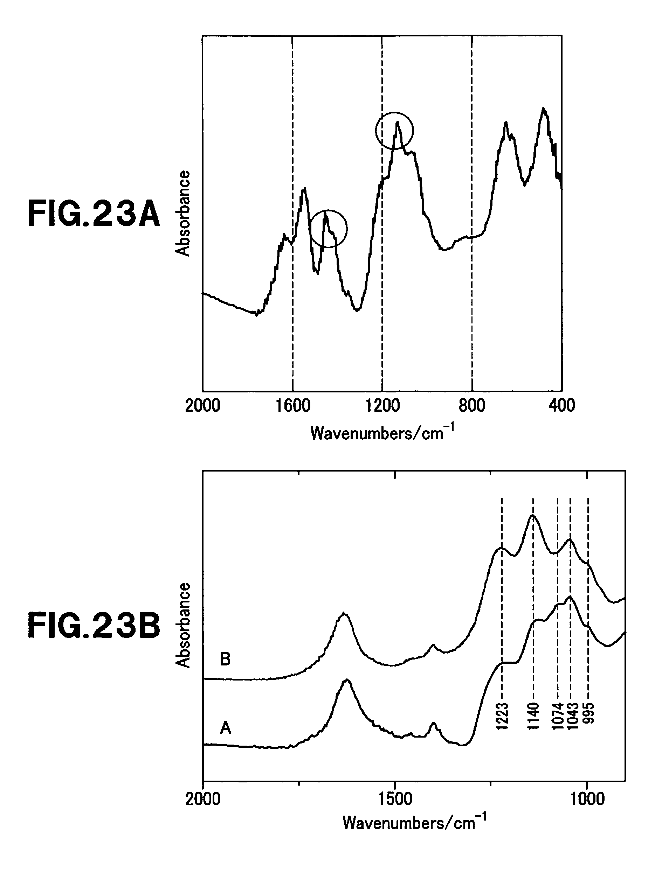

In the sample obtained in Example 11, from the results of FT-IR measurements shown in Fig. 23A, peaks were observed at almost the same positions of the peaks (995, 1043, 1140, and 1223cm⁻¹) derived from a sulfonic acid group in the FT-IR measurement results of SZrO₂ according to a past report (Yinyong S et al., J. Phys. Chem. B 109 (2005) 2567-2572) shown in Fig. 23B.

### [XPS measurement]

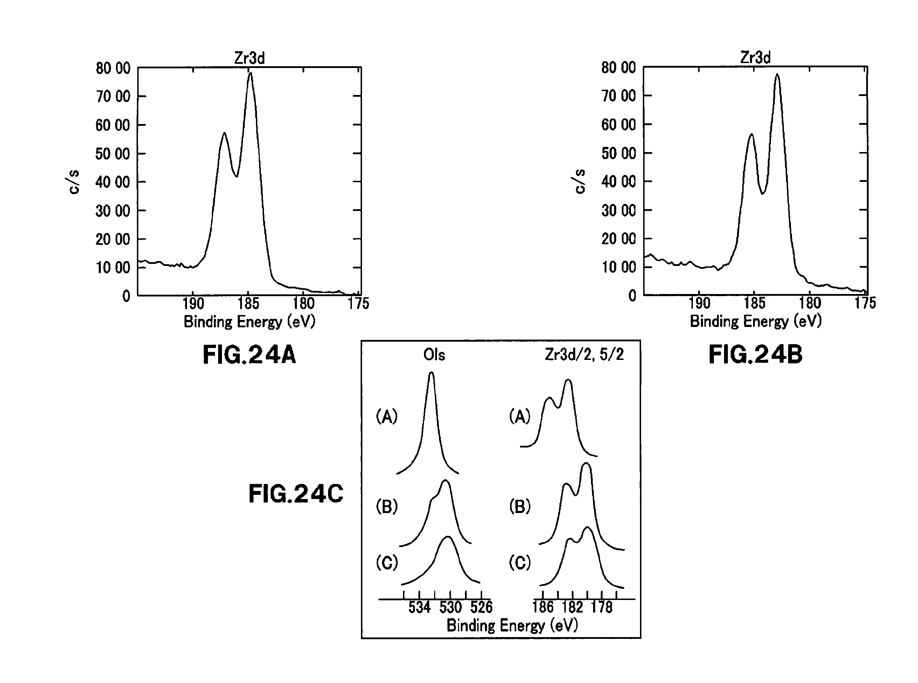

Figs. 24A and 24B show the results of X ray photoelectron spectroscopy (XPS) measurements of the sample obtained in Example 2 and the sample obtained in Example 11, respectively. Comparing the results of Figs. 24A and 24B with the results of XPS measurements of ZrSO₄ and SZrO₂ according to a past report (Fig. 8 in K. Arata, Materials Chem and Phys 26 (1990) 213-237) shown in Fig. 24C, binding energy of ZrSO₄ appears high in both results, and the positions of their peaks were also mostly coincident. From this result, it can be considered that, in the samples obtained in Examples 2 and 11, although a Zr atom would become positively charged by the difference in electronegativity between the Zr atom and atoms surrounding the Zr atom, there arose differences in charge state by whether a Zr atom contains S atoms as the surrounding atoms (ZrSO₄) or not (SZrO₂).

Thus, from the results shown in Figs. 15 to 24, it was confirmed that: in Examples 2 to 4 and Examples 6 to 8, that is, when a sulfuric acid treatment is performed to zirconium nanoparticles at not more than 80 degrees C, Zr(SO₄)₂ is obtained; and in Example 5, that is, when a sulfuric acid treatment is performed to zirconium nanoparticles at 150 degrees C, a mixed crystal of Zr(SO₄)₂ and SZrO₂ is obtained (Refer to the above-mentioned Non Patent Literature 2.). Furthermore, it was confirmed that, in Examples 9 to 11, that is, when zirconium nanoparticles are treated at not more than 80 degrees C by a sulfuric acid solution pH-adjusted by alkali, SZrO₂ is obtained.

### [Heat resistance evaluation]

Heat-resistant evaluations of the samples obtained in Examples 2, 3, 5, 9, and 11 were performed as follows.

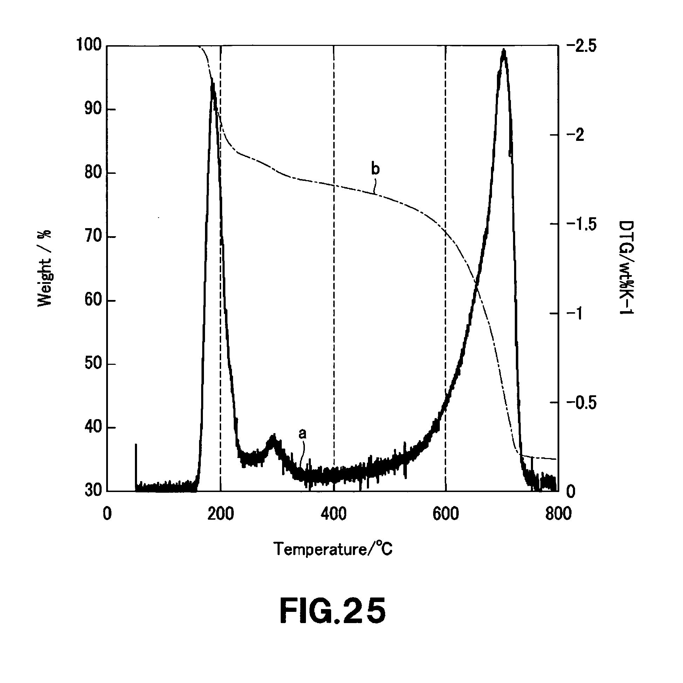

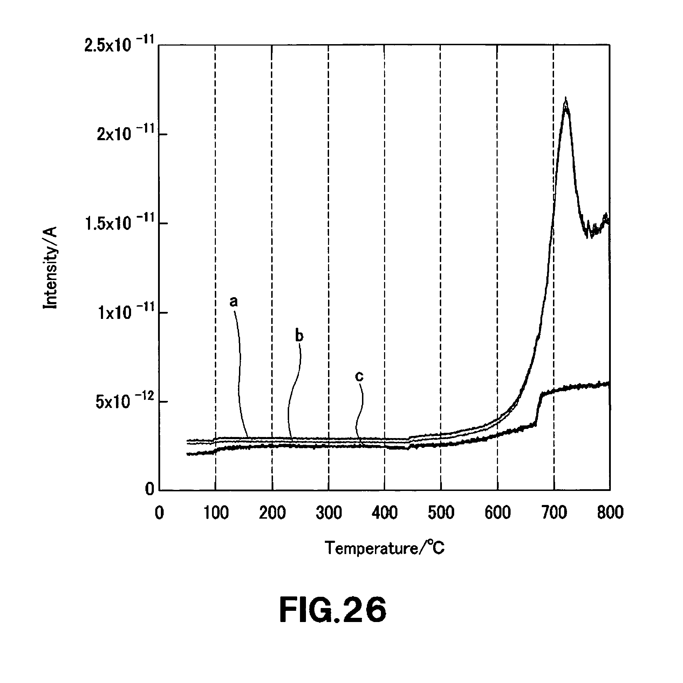

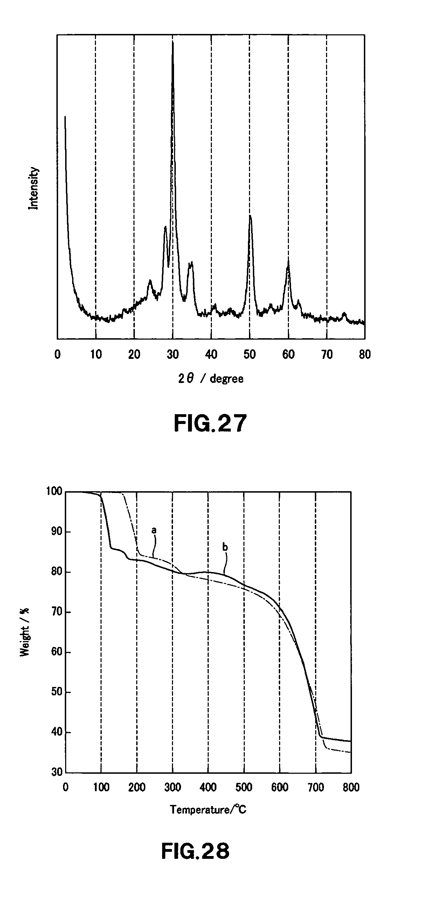

In Fig. 25, a and b show the results of DTG measurement in Example 2 and TGA measurement in Example 2, respectively. In the sample obtained in Example 2, from the results of TGA measurements shown in Fig. 25, it can be confirmed that a mass reduction derived from reduction in adsorbed water occurs at 160 to 200 degrees C. Furthermore, in the sample obtained in Example 2, from the results of TG-MS measurements shown in Fig. 26, it can be confirmed that a sulfonic acid group (SO₃H) is cracked at around 700 degrees C. In Fig. 26, a, b, and c show m/z (SO) = 48, m/z (SO₂) = 64, and m/z (SO₃) = 80, respectively. Furthermore, from the results of XRD measurements after TGA measurements shown in Fig. 27, it can be confirmed that, when the sample obtained in Example 2 is heated at a temperature not less than the phase transition temperature, the crystal structure becomes tetragonal.

In Fig. 28, a and b show the results of TGA measurements in Examples 3 and 5, respectively. From the results of TGA measurements shown in Fig. 28, it can be confirmed that the sample obtained in Example 3 maintains water up to around 160 degrees C and a mass reduction occurs, as in Example 2. On the other hand, it can be confirmed that, in the sample obtained in Example 5, a mass reduction once occurs around 100 degrees C, and then another mass reduction occurs around 160 degrees C. Water elimination occurs at not more than 100 degrees C in SZrO₂, therefore it can be considered that the sample obtained in Example 5 contains SZrO₂ since mass reduction occurs around 100 degrees C.

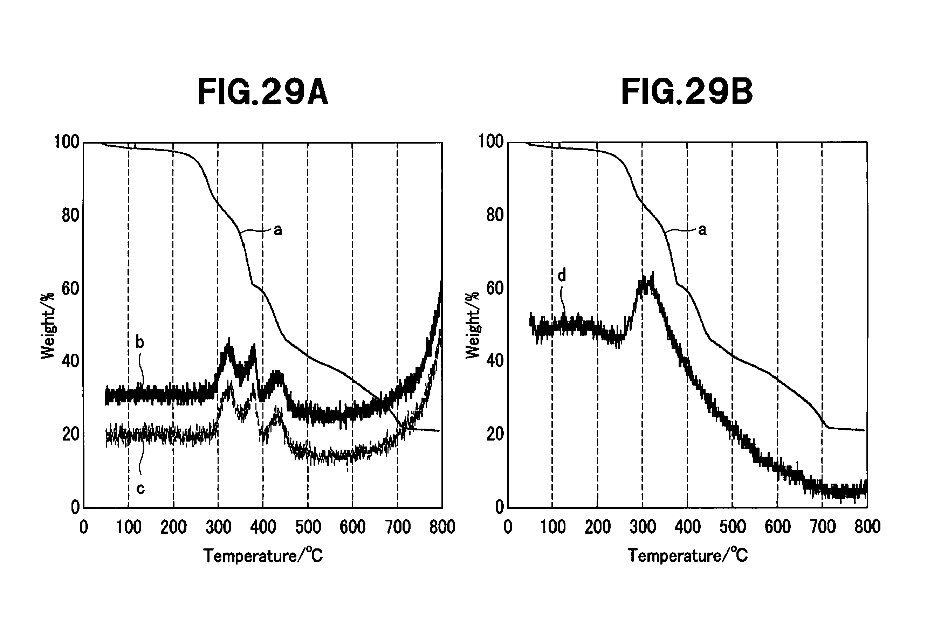

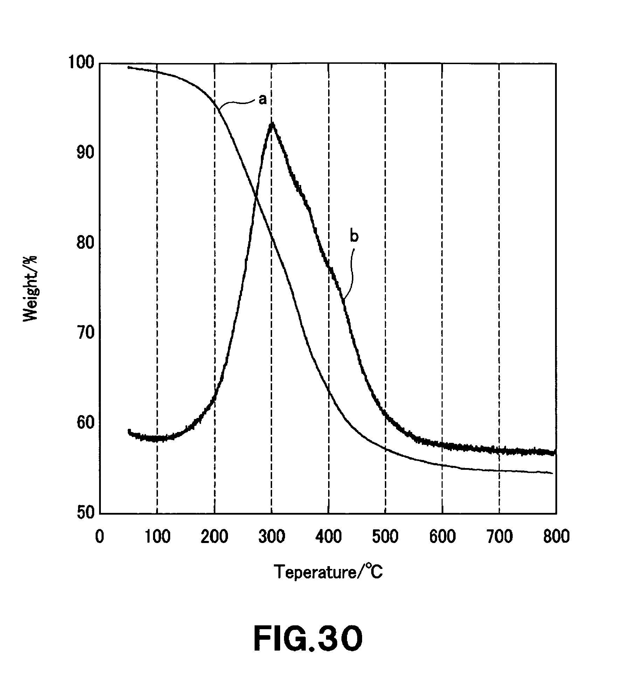

For the sample obtained in Example 9, TGA and TG-MS measurements were performed under measurement conditions of 50 to 5 °C/min. In Fig. 29A and 29B, a, b, c, and d show a TGA curve of the sample obtained in Example 9, MS spectrum of SO, MS spectrum of SO₂, and MS spectrum of CO₂, respectively. From the results shown in Figs. 29A and 29B, carbon (C) decomposition was confirmed at around 300 degrees C as the result of MS spectrum of CO₂. That is, it can be considered that a carbon element is included in the inorganic compound. Thus, in consideration of the fact that the spectrum of CO₂ was not detected in the MS spectrum of Zr(SO₄)₂ and in consideration of the TG-MS spectrum of the zirconium nanoparticles shown in Fig. 30, a possibility was indicated that a part of acetylacetone might not be eliminated, in other words, the unreacted zirconium nanoparticles might exist. In addition, in Fig. 30, a and b show a TGA curve of the zirconium nanoparticles and MS spectrum of CO₂, respectively.

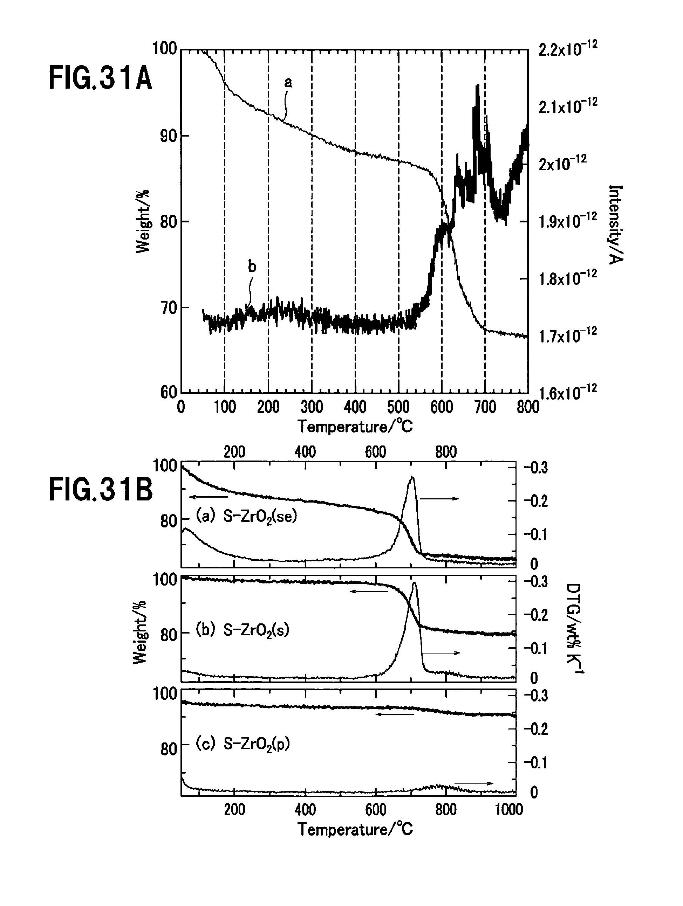

In Fig. 31A, a and b show a TGA curve of the sample obtained in Example 11 and m/z (SO₂) = 64, respectively. From the results of TGA and TG-MS measurements shown in Fig. 31A, it was confirmed that a decomposition reaction occurs around 500 degrees C in the sample obtained in Example 11. That is, it was indicated that the sample obtained in Example 11 has heat resistance up to 500 degrees C. Furthermore, it was reported that SZrO₂ reported by a past literature (Refer to the above-mentioned Non Patent Literature 1) maintains a stable structure up to around 600 degrees C, as shown in Fig. 31B.

### [Water resistance evaluation]

Water resistance evaluation of the sample obtained in Example 2 was performed as follows. That is, 0.2 g of the sample obtained in Example 2 was dispersed in 10 ml of water, and dried at 80 degrees C after one hour stirring, then recrystallized powders were measured by XRD measurements.

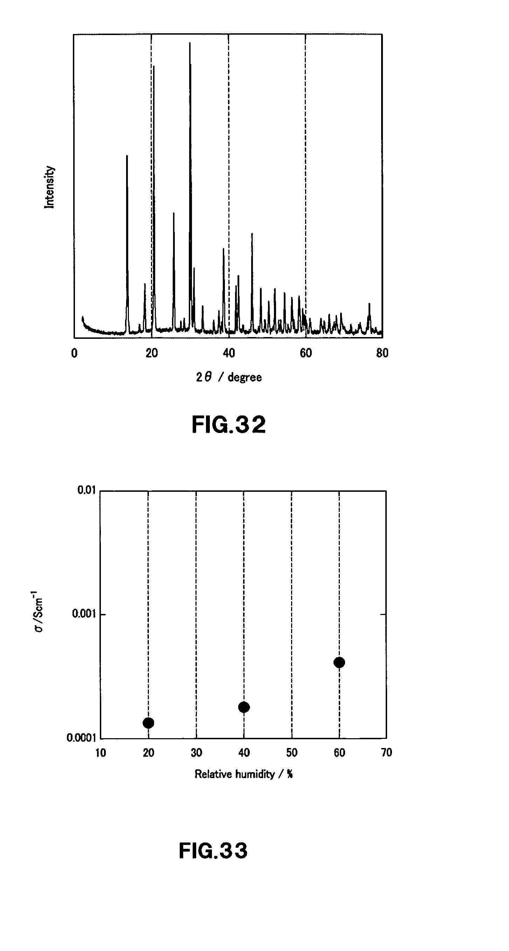

In Example 2, when comparing the results of XRD measurements shown in Fig. 32 to the results of XRD measurements shown in Fig. 15, that is, the results before dispersing in water, it can be confirmed that positions of the peaks are not changed although there are minute changes in peak ratio. From the results shown in these Figs. 15 and 32, it is found that the sample obtained in Example 2 can be used as an electrolyte even in a high humidity range since the structure does not change even if the sample is dispersed in water.

### [Proton conductivity evaluation]

Proton conductivity evaluation of the samples obtained in Examples 2 and 9 was performed by impedance measurements, as in the above-mentioned Evaluation Test 1.

In the sample obtained in Example 2, when a measurement temperature was 90 degrees C, the results were as shown in Fig. 33. That is, the sample obtained in Example 2 showed proton conductivity of approximately 1 × 10⁻⁴ to 4 × 10⁻⁴ S/cm at a temperature of 90 degrees C and a relative humidity of 20 to 60%.

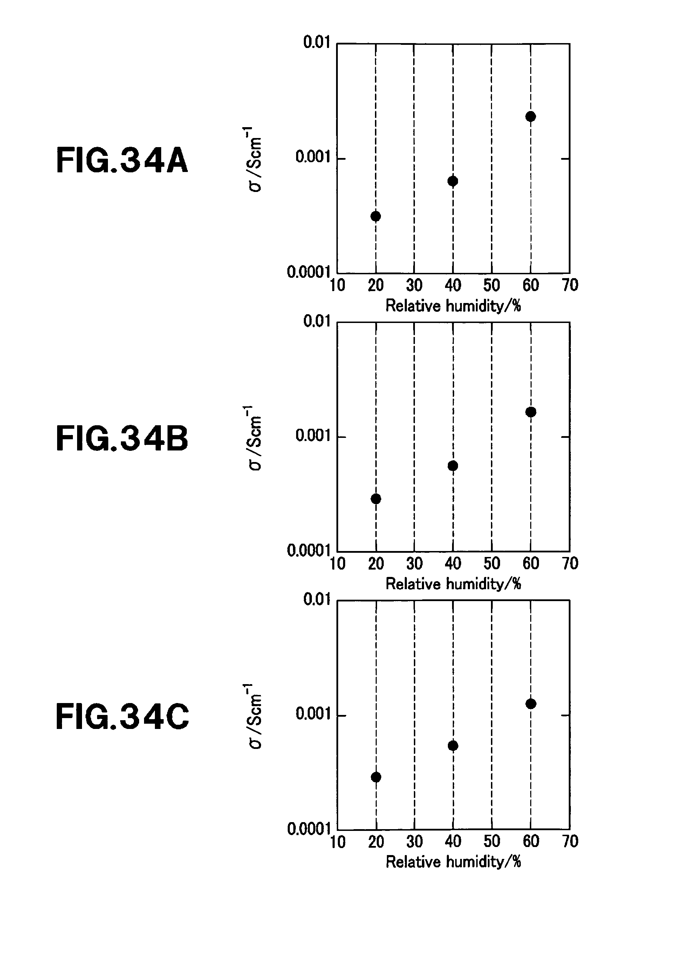

The sample obtained in Example 9 showed the results as shown in Fig. 34A when a measurement temperature was 90 degrees C, the results as shown in Fig. 34B when a measurement temperature was 80 degrees C, and the results as shown in Fig. 34C when the measurement temperature was 70 degrees C. That is, as shown in Figs. 34A to 34C, the sample obtained in Example 9 showed proton conductivity of approximately 3 × 10⁻⁴ to 2 × 10⁻³ S/cm at a temperature of 90 to 70 degrees C and a relative humidity of 20 to 60%.

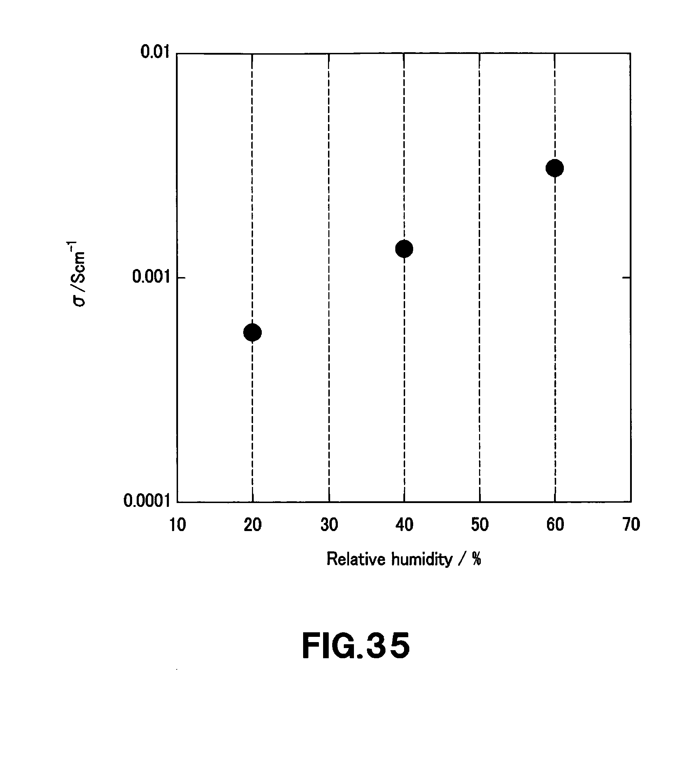

The sample obtained in Example 10 showed the results shown in Fig. 35 when a measurement temperature was 90 degrees C. That is, the sample obtained in Example 10 showed proton conductivity of approximately 6 × 10⁻⁴ to 3 × 10⁻³ S/cm at a temperature of 90 degrees C and a relative humidity of 20 to 60%.

### [Hot water resistance test]

As for hot water resistance test of the samples obtained in Examples 2 and 10, XRD measurements and FT-IR measurements were performed at 150 degrees C by using a pressure-resistant hot clave (TVS-1, TAIATSU TECHNO Corporation).

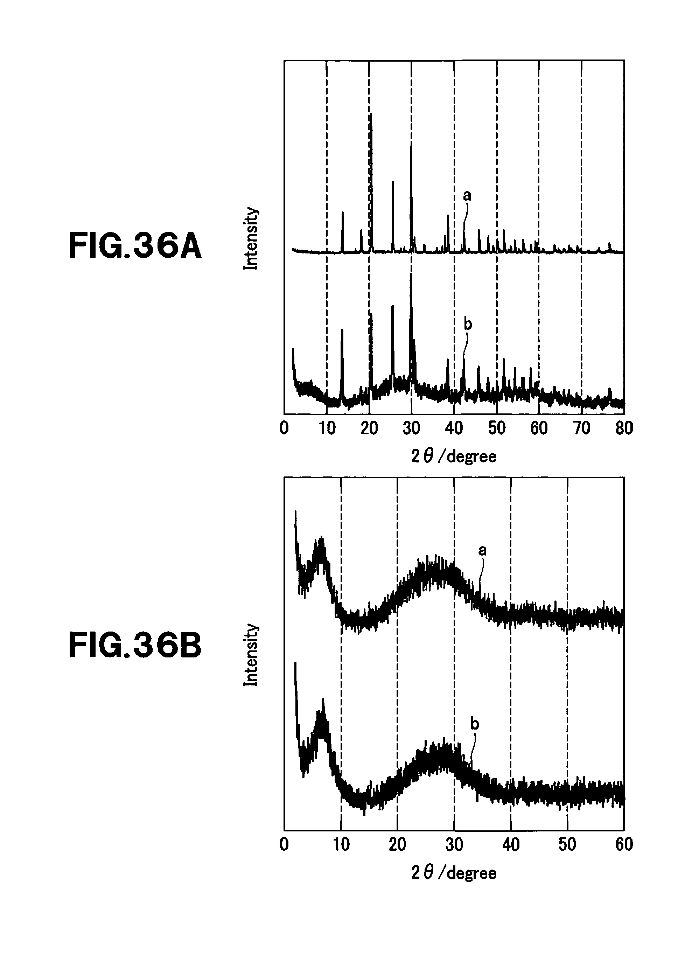

In Fig. 36A, a and b show XRD patterns of the sample obtained in Example 2 before and after a hot water resistance test, respectively. In Fig. 36B, a and b show XRD patterns of the sample obtained in Example 10 before and after a hot water resistance test, respectively. From the results of the XRD measurements shown in Figs. 36A and 36B, it is found that any change is not observed before and after the hot water resistance test in the samples obtained in Examples 2 and 10.

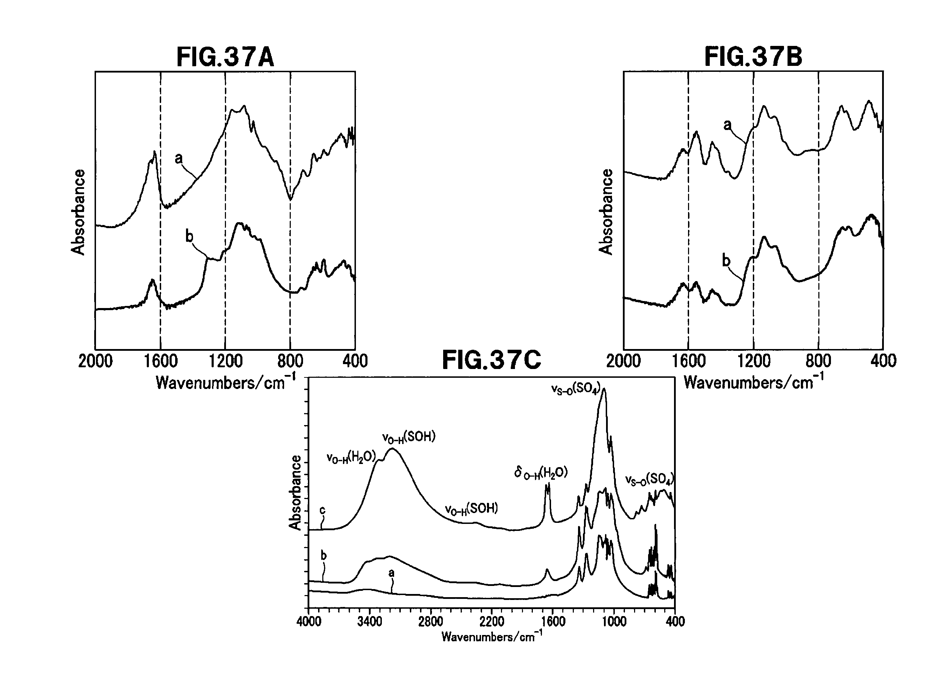

In Fig. 37A, a and b show FT-IR spectra of the sample obtained in Example 2 before and after a hot water resistance test, respectively. Furthermore, in Fig. 37B, a and b show FT-IR spectra of the sample in Example 10 before and after a hot water resistance test, respectively.

In the sample obtained in Example 2, as shown in the results of FT-IR measurements shown in Fig. 37A, new peaks occurred at 1278 cm⁻¹ and 593 cm⁻¹ after a hot water resistance test. Furthermore, in the sample obtained in Example 10, from the results of FT-IR measurements shown in Fig. 37B, no change was observed before and after the test. Moreover, the hot water resistance test is an accelerated test at higher temperature and higher pressure than in usual fuel cell tests.

Assignment of the peak shown in Fig. 37A was judged by reference to Fig. 37C (Refer to a literature of I. J. Dijs, et al., Phys. Chem. Chem. Phys., 2001, 3, 4423-4429). Graphs shown in Fig. 37C illustrates that, in a process of synthesizing a zirconium sulfate compound (Zr(SO₄)₂) from ZrOCl₂ by using fuming sulfuric acid, a heat treatment is given to synthesize a sulfuric anhydride zirconium compound (a substance in Fig. 37C is regarded as "ZrSO₄"), then immediately after the synthesis of the anhydrous ZrSO₄ (a in Fig. 37C), the anhydrous ZrSO₄ is left in the atmosphere for 1 week (b in Fig. 37C) and for 2 weeks (c in Fig. 37C) to adsorb water in the atmosphere and then change into stable 4-hydrates.

Comparing FT-IR spectrum of the sample obtained in Example 2 after a hot water resistance test shown in b in Fig. 37A to FT-IR spectrum of dried ZrSO₄ shown in a in Fig. 37C, it is found that the sample obtained in Example 2 has a structure similar to that of anhydrous ZrSO₄. From this result, it is considered that hot water has no influence on binding Zr, a skeleton, with a sulfuric acid group although there is suggested an influence by hot water on water which is coordinated to the sample obtained in Example 2.

Moreover, when the sample obtained in Example 2 after a hot water resistance test was redispersed in water and recovered, the same FT-IR spectrum as that before a hot water resistance test was obtained. Thus, it is considered that a structural change associated with elimination of water of crystallization caused by a hot water resistance test is reversible.

From the above results, it is found that the samples obtained in Examples 2 and 10 are stable under fuel cell test conditions.

### [Fenton's test]

In order to examine radical resistance of the samples obtained in Examples 2 and 10, Fenton's test was performed as in the above-mentioned Example 1. More specifically, approximately 0.1 g of the sample obtained in Example 2 or 10 and 4.9 ml of 3 wt% H₂O₂ solution containing 5 ppm FeSO₄ were added into a sample bottle to produce a sample solution of 2% by weight. A sample bottle was placed in a 60 degrees C oil bath, and reacted for a predetermined time with stirring. As a quenching agent, isopropyl alcohol was added in an excessive amount, and stirred. After stirring, the sample solution was sufficiently dried at 80 degrees C.

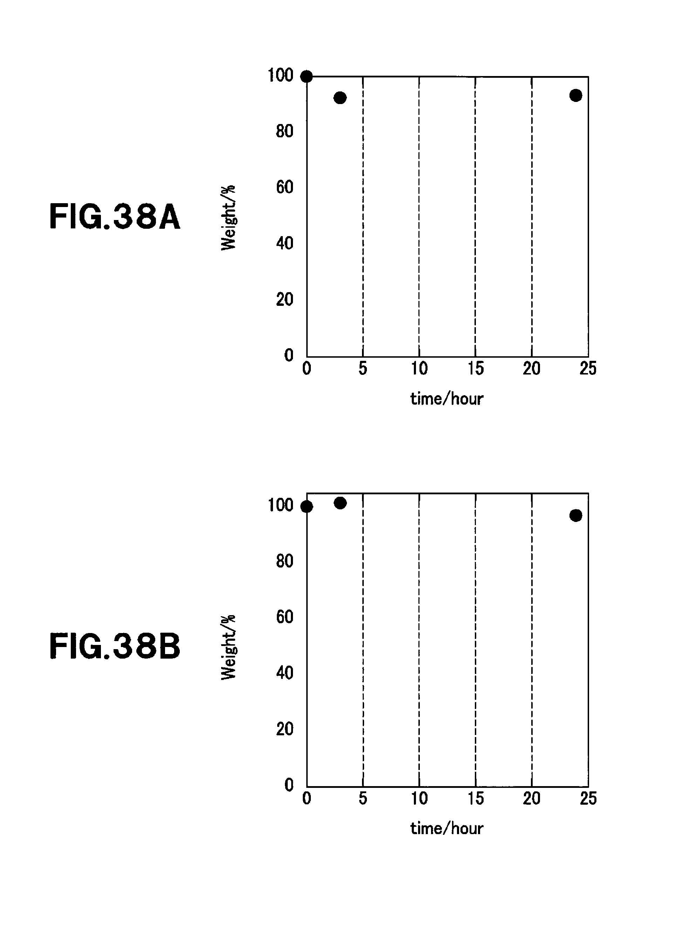

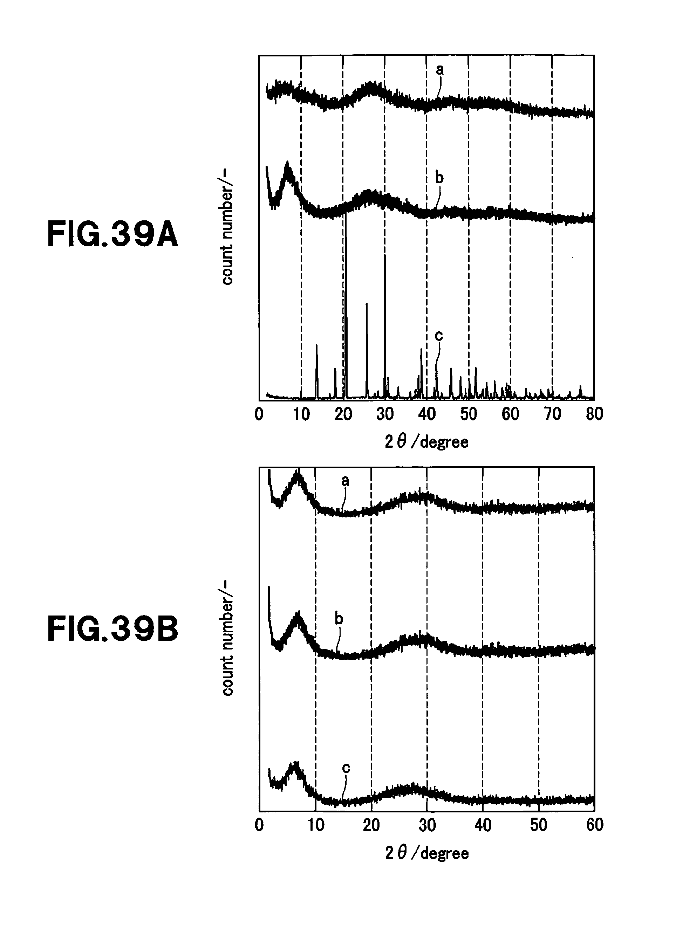

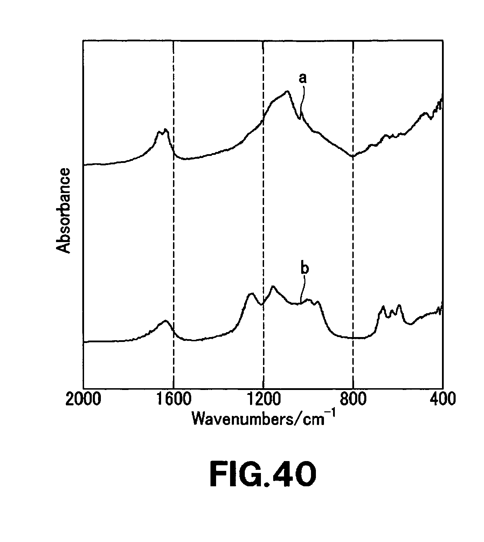

Each of Figs. 38A, 39A, and 40 shows the measurement result in Example 2, while each of Figs. 38B and 39B shows the measurement result in Example 10. In Figs. 39A and 39B, a, b, and c show a XRD pattern 24 hours after Fenton's test, a XRD pattern 3 hours after Fenton's test, and a XRD pattern before Fenton's test, respectively. Moreover, in Fig. 40, a and b show FT-IR spectra immediately after (0 hours after) Fenton's test and FT-IR spectra 24 hours after Fenton's test, respectively.

In the sample obtained in Example 2, as shown in Fig. 38A, a 10% mass reduction between before and after Fenton's test occurred. From the results of XRD measurements shown in Fig. 39A, it is found that a crystal structure of the sample obtained in Example 2 was changed.

Fig. 40 shows FT-IR spectra of the sample obtained in Example 2 after Fenton's test. Assignment of peaks shown in Fig. 40 was judged by reference to the above-mentioned Fig. 37C.

In addition, comparing FT-IR spectra of the sample obtained in Example 2 after Fenton's test shown in Fig. 40 with FT-IR spectrum of dried ZrSO₄ shown in a of Fig. 37C, it is found that the sample obtained in Example 2 shown in Fig. 40 has a structure similar to that of anhydrous ZrSO₄. Furthermore, the above-mentioned literature reports that, as for crystal structure, diffraction of anhydrous ZrSO₄ cannot be observed in XRD measurements, as in the results in Fig. 39A. From these results, it is considered that a radical has no influence on binding Zr, a skeleton, with a sulfonic acid group although there is suggested an influence by radical on water which is coordinated to the sample obtained in Example 2.

Moreover, when the sample obtained in Example 2 after Fenton's test was redispersed in water and recovered, the same FT-IR spectrum and XRD spectrum as that before Fenton's test was obtained. Thus, it is considered that a structural change associated with elimination of water of crystallization by Fenton's test is reversible.

Meanwhile, in the sample obtained in Example 10, a difference in mass between before and after Fenton's test was not observed, as shown in Fig. 38B. In addition, in the sample obtained in Example 10, difference in XRD measurement results between before and after Fenton's test was not observed, as shown in Fig. 39B. Therefore, it is found that the sample obtained in Example 10 is extremely stable to a radical.

From the above results, both the samples obtained in Examples 2 and 10 exhibit high durability in Fenton's test.

### · Evaluation test 3

### [XRD measurement]

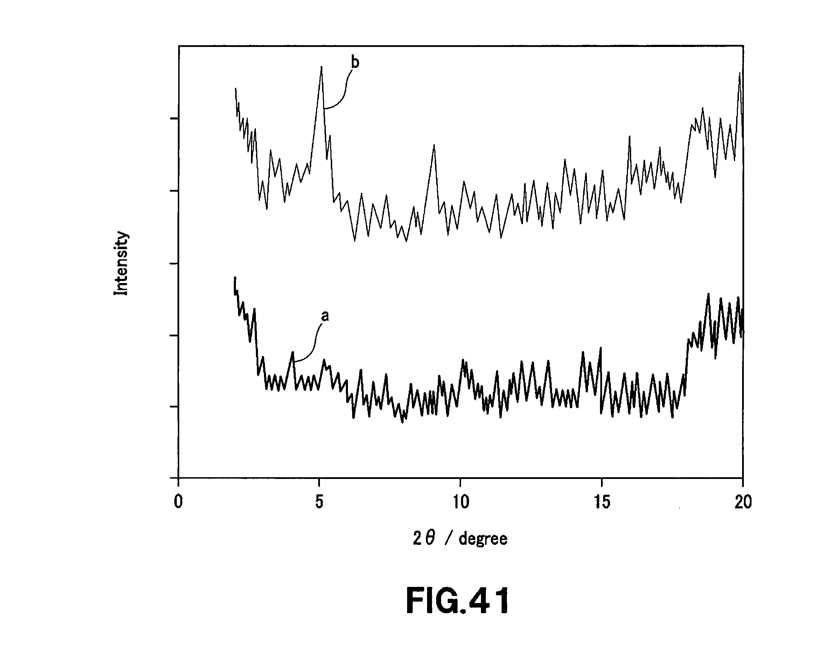

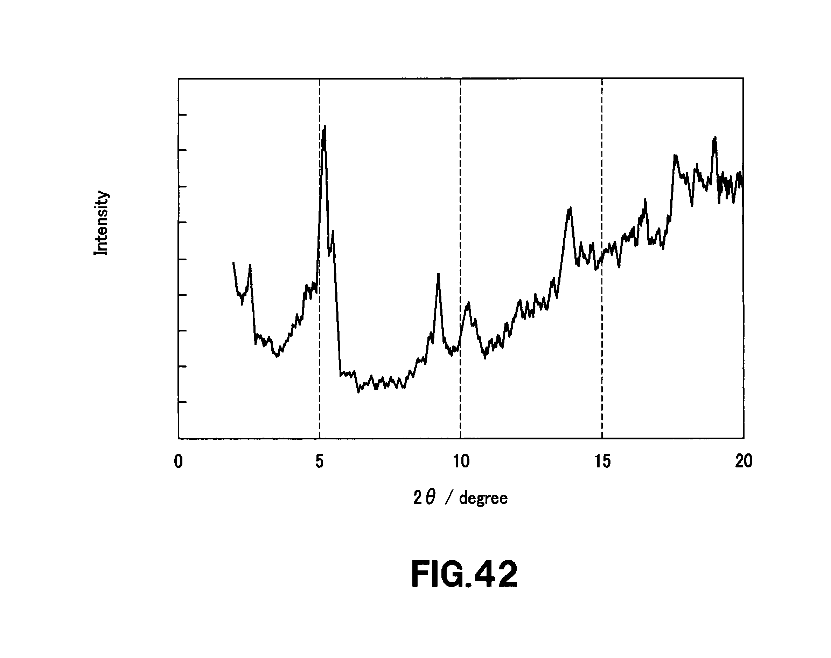

In Fig. 41, a shows the results of XRD measurements of a Zr-SPES cast membrane, and b shows the results of XRD measurements of a ZrSPP-SPES cast membrane (after reacting with a SPP sulfuric acid solution). In Example 12, from the results of XRD measurements shown in Fig. 41, a peak of ZrSPP-SPES cast membrane can be confirmed in the vicinity of a peak of ZrSPP. Moreover, in Example 13, from the results of XRD measurements shown in Fig. 42, a peak of the ZrSPP-SPES pore-filling membrane can be confirmed in the vicinity of a peak of ZrSPP shown in Fig. 41. In other words, from the results of XRD measurements shown in these Fig. 41 and Fig. 42, peaks of both the cast membrane obtained in Example 12 and the pore-filling membrane obtained in Example 13 can be confirmed in the vicinity of the peak of ZrSPP.

### [FT-IR measurement]

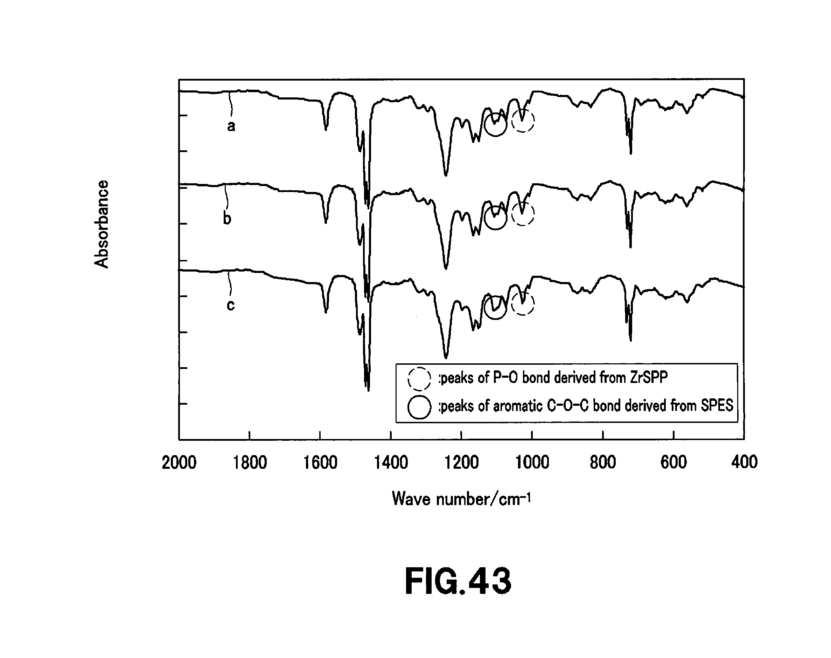

In Fig. 43, solid circles represent peaks of aromatic C-O-C bond derived from SPES, and dashed circles represent peaks of P-O bond derived from ZrSPP. In Example 14, from the results of FT-IR measurements shown in Fig. 43, peaks of P-O bond derived from ZrSPP and peaks of aromatic C-O-C bond derived from SPES were observed in each case of washing for 1 day (a in Fig. 43), for 2 days (b in Fig. 43), and for 10 days (c in Fig. 43).

From the results shown in the above-mentioned Figs. 41 to 43, in Examples 12 to 14, it can be confirmed that the zirconium nanoparticles were converted into ZrSPP in a SPES polymer matrix in a cast membrane or a pore-filling membrane.

### [Proton conductivity evaluation]

Proton conductivity evaluations for the sample obtained in Example 15 (ZrSPP-SPES pore-filling membrane) and the sample obtained in Reference Example 1 (SPES pore-filling membrane) were performed by impedance measurements. The sample obtained in Example 15 or Reference Example 1 was sandwiched with glass plates, and measured by a four terminal method by use of a platinum electrode. A measurement temperature for the proton conductivity was 90 degrees C, and the relative humidity was varied from 20 to 80%. In addition, the proton conductivity of the samples obtained in Example 15 and Reference Example 1 at low temperature (-30 to 0 degrees C) was measured by the same measurement method.

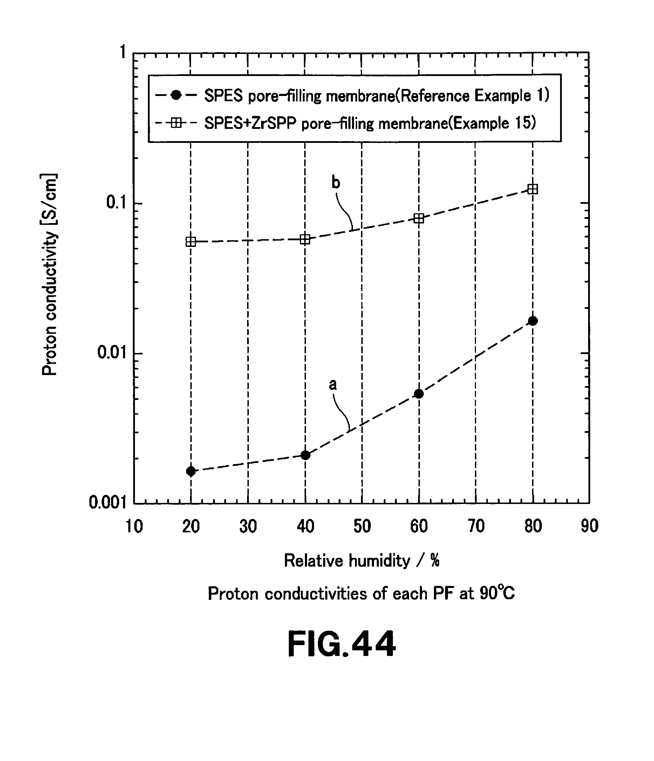

Fig. 44 shows the measurement results of the proton conductivity at 90 degrees C. In Fig. 44, a shows the results of the sample obtained in Reference Example 1, and b shows the results of the sample obtained in Example 15. The sample obtained in Example 15 exhibited proton conductivity of not less than approximately 5.0 × 10⁻² S/cm in a humidity range of 20 to 80%. Thus, the ZrSPP-SPES pore-filling membrane obtained in Example 15 exhibited proton conductivity far higher than that of the sample obtained in Reference Example 1 (a SPES pore-filling membrane not containing SPP particles) in all the humidity ranges where the measurements were performed.

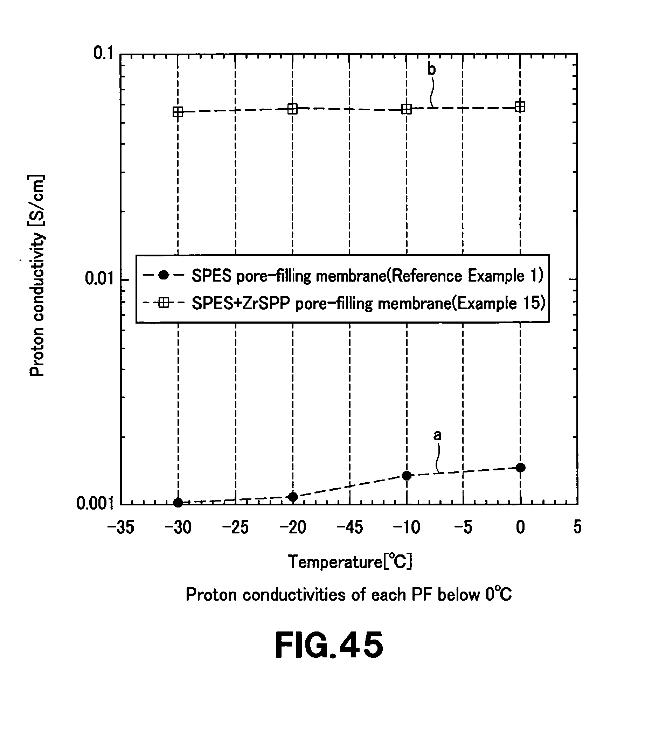

Moreover, Fig. 45 shows the measurement results of proton conductivity at not more than 0 degrees C. In Fig. 45, a shows the results of the sample obtained in Reference Example 1, and b shows the results of the sample obtained in Example 15. The sample obtained in Example 15 exhibited proton conductivity of not less than approximately 5.0 × 10⁻² S/cm in a temperature range of -30 to 0 degrees C. Thus, the sample obtained in Example 15 exhibited proton conductivity far higher than that of the sample obtained in Reference Example 1.

### · Evaluation Test 4

### [Cell performance evaluation of a capping MEA]

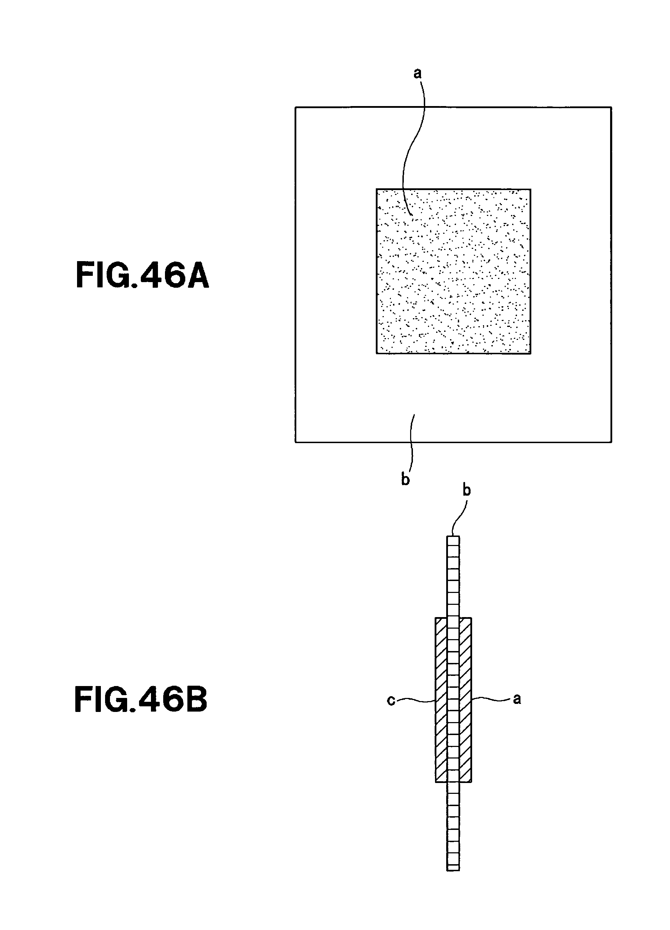

Cell performance evaluation was performed by using a capping MEA obtained in Example 16. In the capping MEA obtained in Example 16, capping electrodes (an anode and a cathode) shown in a and c in Fig. 46 and a capping pore-filling membrane shown in b in Fig. 46 are joined. An amount of catalyst in each of the capping electrodes shown in a and c in Fig. 46, that is, an amount of platinum is 0.3 mg/cm². Furthermore, the capping pore-filling membrane shown in b in Fig. 46 is 5 cm × 5 cm in size.

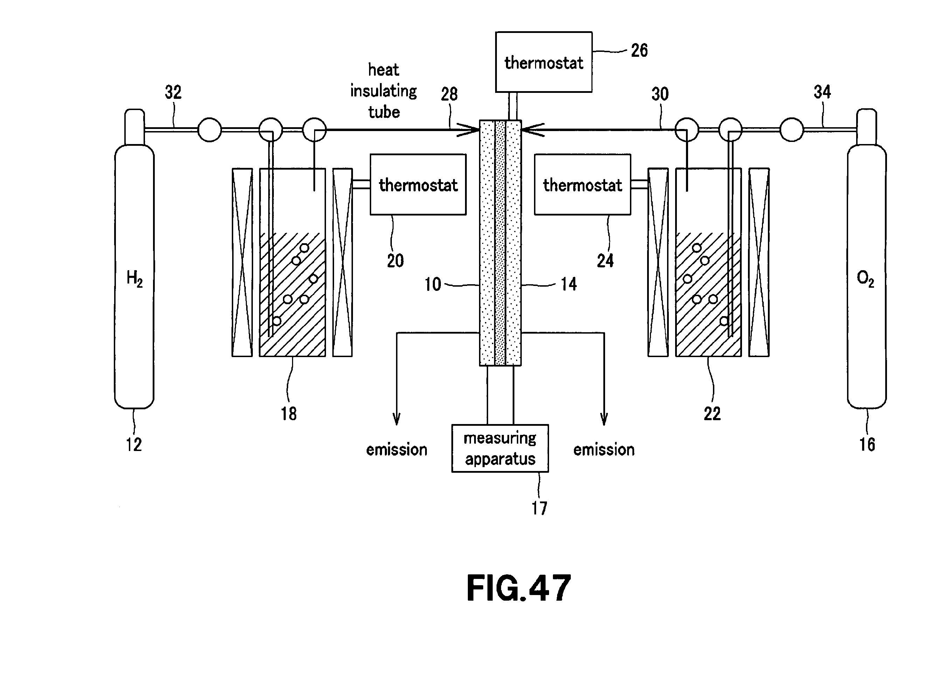

As shown in Fig. 47, cell performance of MEA was evaluated by supplying hydrogen gas 12 and oxygen gas 16 to an anode 10 and a cathode 14, respectively, and then measuring I-V performance by use of a measuring apparatus 17.

More specifically, as shown in Fig. 47, the humidity of the hydrogen gas 12 to be supplied to the anode 10 and the humidity of the oxygen gas 16 to be supplied to the cathode 14 were controlled by setting a temperatures of a thermostat 20 connected to a humidifier (bubbler) 18 connected to the anode 10, a thermostat 24 connected to a humidifier 22 connected to the cathode 14, and a thermostat 26. (For example, when a humidity was 21.0%, a cell temperature, an anode bubbler temperature, and a cathode bubbler temperature were set to 60 degrees C, 23 degrees C, and 23 degrees C, respectively). Moreover, 1-V performance was evaluated by using the results of a tenth cycle (2 hours after the start of the measurement). Note that, as shown in Fig. 47, the anode 10 and the humidifier 18 are connected by a heat insulating tube 28. Furthermore, the cathode 14 and the humidifier 22 are connected by a heat insulating tube 30. Furthermore, the hydrogen gas 12 and the humidifier 18 are connected by a tube 32. Furthermore, the oxygen gas 16 and the humidifier 22 are connected by a tube 34.

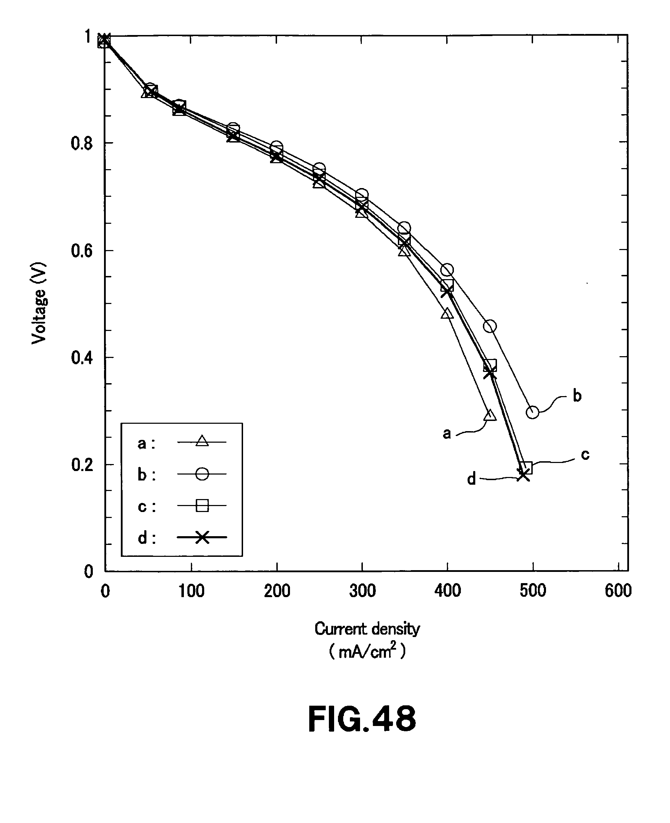

Fig. 48 illustrates graphs showing the results of cell performance evaluation of the capping MEA obtained in Example 16, at 60 degrees C and a humidity of 20 to 80%.

There is shown in a of Fig. 48 the cell performance at a humidity of 79.0% , a cell temperature of 60 degrees C, an anode bubbler temperature of 60 degrees C, and a cathode bubbler temperature of 55 degrees C. There is shown in b of Fig. 48 the cell performance at a humidity of 61.4%, a cell temperature of 60 degrees C, an anode bubbler temperature of 42 degrees C, and a cathode bubbler temperature of 42 degrees C. There is shown in c of Fig. 48 the cell performance at a humidity of 39.9%, a cell temperature of 60 degrees C, an anode bubbler temperature of 34 degrees C, and a cathode bubbler temperature of 34 degrees C. There is shown in d of Fig. 48 the cell performance at a humidity of 21.0%, a cell temperature of 60 degrees C, an anode bubbler temperature of 23 degrees C, and a cathode bubbler temperature of 23 degrees C.

From the result shown in Fig. 48, it is found that the MEA obtained in Example 16 achieved almost the same cell performance in the wide humidity range of 20 to 80%.

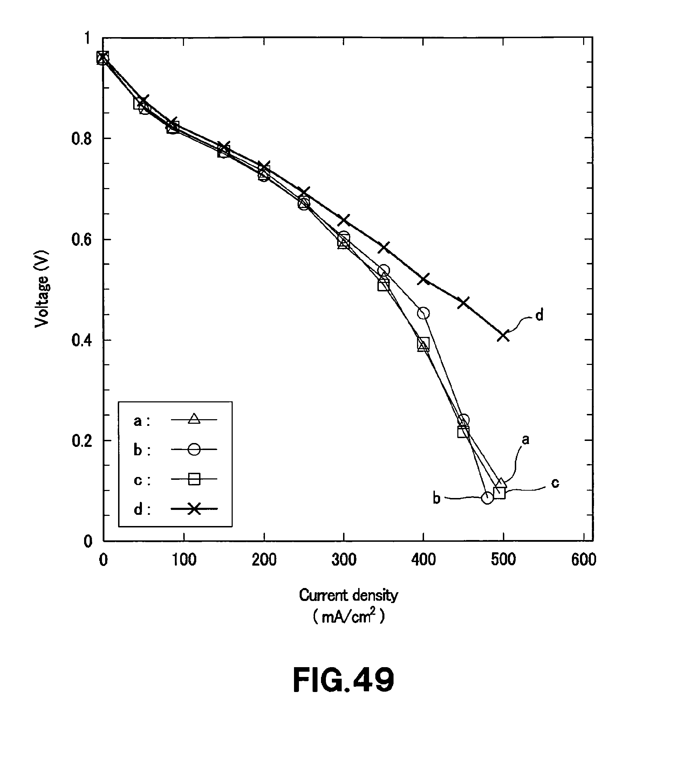

Fig. 49 illustrates graphs showing the results of cell performance evaluation of the capping MEA obtained in Example 16, at 90 degrees C and a humidity of 20 to 80%.

There is shown in a of Fig. 49 the cell performance at a humidity of 79.0%, a cell temperature of 90 degrees C, an anode bubbler temperature of 90 degrees C, and a cathode bubbler temperature of 84 degrees C. There is shown in b of Fig. 49 the cell performance at a humidity of 59.6%, a cell temperature of 90 degrees C, an anode bubbler temperature of 77 degrees C, and a cathode bubbler temperature of 77 degrees C. There is shown in c of Fig. 49 the cell performance at a humidity of 40.6%, a cell temperature of 90 degrees C, an anode bubbler temperature of 68 degrees C, and a cathode bubbler temperature of 68 degrees C. There is shown in d of Fig. 49 the cell performance at a humidity of 20.3%, a cell temperature of 90 degrees C, an anode bubbler temperature of 53 degrees C, and a cathode bubbler temperature of 53 degrees C.

From the results shown in Fig. 49, it is found that the MEA obtained in Example 16 achieved the cell performance not depending on humidity as in the case of 60 degrees C. In other words, it is found that the capping MEA obtained in Example 16 does not degrade the performance even under severe conditions required for automobiles, such as at a temperature of 90 degrees C and a humidity of 20%. Moreover, the cell performance at 90 degrees C and 20% humidity did not decrease for at least 6 hours.

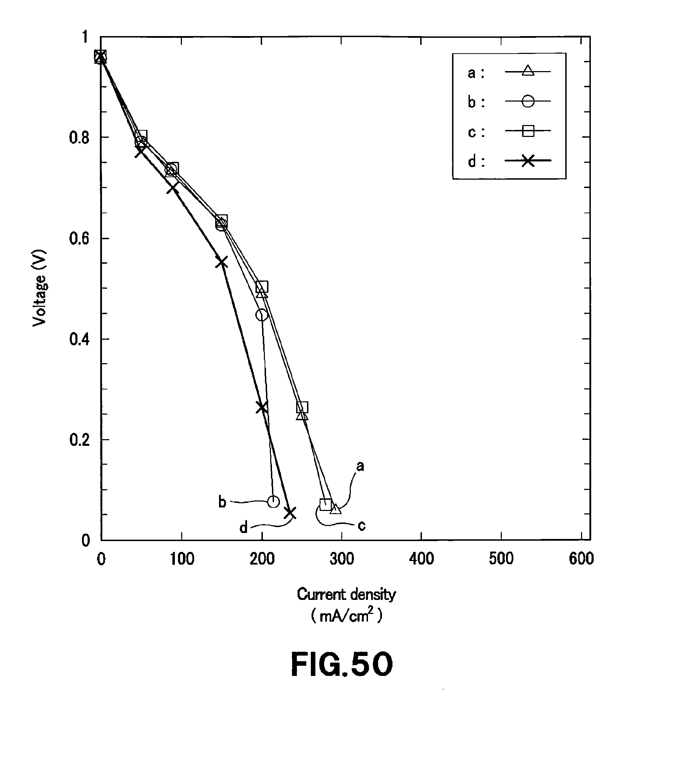

Fig. 50 illustrates graphs showing the results of cell performance evaluation of the capping MEA obtained in Example 16, at 120 degrees C and a humidity of 10 to 50%.

There is shown in a of Fig. 50 the cell performance at a humidity of 51.0%, a cell temperature of 120 degrees C, an anode bubbler temperature of 100 degrees C, and a cathode bubbler temperature of 100 degrees C. There is shown in b of Fig. 50 the cell performance at a humidity of 39.6%, a cell temperature of 120 degrees C, an anode bubbler temperature of 93 degrees C, and a cathode bubbler temperature of 93 degrees C. There is shown in c of Fig. 50 the cell performance at a humidity of 20.2%, a cell temperature of 120 degrees C, an anode bubbler temperature of 76 degrees C, and a cathode bubbler temperature of 76 degrees C. There is shown in d of Fig. 50 is the cell performance at a humidity of 10.0%, a cell temperature of 120 degrees C, an anode bubbler temperature of 60 degrees C, and a cathode bubbler temperature of 60 degrees C.

As shown in Fig. 50, the MEA obtained in Example 16 did not exhibit decrease in performance even at extremely low humidity, that is, a humidity of 10.0%.

## Claims

1. A production method of strongly acidic zirconium particles the method comprising:
obtaining zirconium nanoparticles by reaction of a zirconium alkoxide with a chelating agent and a catalyst in a solvent; and
obtaining strongly acidic zirconium particles by reaction by adding sulfophenyl phosphonic acid to the zirconium nanoparticles.

2. The production method of the strongly acidic zirconium particles according to claim 1, wherein the zirconium alkoxide is a zirconium butoxide.

3. The production method of the strongly acidic zirconium particles according to claim 1 or 2, wherein the chelating agent is acetylacetone.

4. The production method of the strongly acidic zirconium particles according to any one of claims 1 to 3, wherein the solvent is isopropyl alcohol.

5. The production method of the strongly acidic zirconium particles according to any one of claims 1 to 4, wherein the zirconium nanoparticles have a volume average particle diameter of 2 nm measured by dynamic light scattering.

6. A proton conducting material, wherein used are the strongly acidic zirconium particles obtained by the production method of the strongly acidic zirconium particles according to any one of claims 1 to 5.

7. A production method of strongly acidic zirconium particles comprising:
a polymer solution preparation step of obtaining a polymer solution by dissolving a proton conducting polymer in a first polar organic solvent;
a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent;
a second dispersing step of obtaining a dispersion by pouring the polymer solution into the zirconium nanoparticle dispersion, the dispersion including the polar organic solvents and a proton conducting composite material having the proton conducting polymer and the zirconium nanoparticles;
a proton conducting composite material preparation step of obtaining the proton conducting composite material by removing the first polar organic solvent and the second polar organic solvent from the dispersion obtained by the second dispersing step; and
a reaction step of obtaining strongly acidic zirconium particles by reaction by adding sulfophenyl phosphonic acid to the proton conducting composite material obtained by the proton conducting composite material preparation step.

8. A proton conducting material, wherein used are the strongly acidic zirconium particles obtained by the production method of the strongly acidic zirconium particles according to claim 7.

9. An electrode for a fuel cell comprising a catalyst layer, the catalyst layer having the proton conducting material according to claims 6 or 8.

10. A production method of a proton conducting membrane comprising:
a polymer solution preparation step of obtaining a polymer solution by dissolving a proton conducting polymer in a first polar organic solvent;
a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent;
a second dispersing step of obtaining a composite material dispersion by mixing the polymer solution with the zirconium nanoparticle dispersion, the dispersion including the polar organic solvents and a proton conducting composite material having the proton conducting polymer and the zirconium nanoparticles;
an impregnation step of impregnating pores of a porous polymer base material with the composite material dispersion obtained by the second dispersing step; and
a reaction step of obtaining a proton conducting membrane in which a strongly acidic zirconium compound and the proton conducting polymer are fixed to the porous polymer base material by reacting sulfophenyl phosphonic acid with the porous polymer base material impregnated with the composite material dispersion, the strongly acidic zirconium compound being produced from the zirconium nanoparticles and the sulfophenyl phosphonic acid.

11. The proton conducting membrane obtained by the production method of the proton conducting membrane according to claim 10.

12. A membrane electrode assembly, wherein an electrode and the proton conducting membrane according to claim 11 are used, the electrode having a catalyst layer including the proton conducting material according to claim 6 or 8.

13. A fuel cell, wherein the membrane electrode assembly according to claim 12 is used.

14. A production method of strongly acidic zirconium particles the method comprising:
obtaining the zirconium nanoparticles obtained by reacting a zirconium alkoxide with a chelating agent and a catalyst in a solvent; and
obtaining the strongly acidic zirconium particles by reaction by adding sulfuric acid to the zirconium nanoparticles.

15. The production method of the strongly acidic zirconium particles according to claim 14, wherein the zirconium alkoxide is a zirconium butoxide.

16. The production method of the strongly acidic zirconium particles according to claim 14 or 15, wherein the chelating agent is acetylacetone.

17. The production method of the strongly acidic zirconium particles according to any one of claims 14 to 16, wherein the solvent is isopropyl alcohol.

18. The production method of the strongly acidic zirconium particles according to any one of claims 14 to 17, wherein the zirconium nanoparticles have a volume average particle diameter of 2 nm measured by dynamic light scattering.

19. A proton conducting material, wherein used are the strongly acidic zirconium particles obtained by the production method of the strongly acidic zirconium particles according to any one of claims 14 to 18.

20. A production method of strongly acidic zirconium particles comprising:
a polymer solution preparation step of obtaining a polymer solution by dissolving a proton conducting polymer in a first polar organic solvent;
a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent;
a second dispersing step of obtaining a dispersion by pouring the polymer solution into the zirconium nanoparticle dispersion, the dispersion including the polar organic solvents and a proton conducting composite material having the proton conducting polymer and the zirconium nanoparticles;
a proton conducting composite material preparation step of obtaining the proton conducting composite material by removing the first polar organic solvent and the second polar organic solvent from the dispersion obtained by the second dispersing step; and
a reaction step of obtaining strongly acidic zirconium particles by reaction by adding sulfuric acid to the proton conducting composite material obtained by the proton conducting composite material preparation step.

21. A proton conducting material, wherein used are the strongly acidic zirconium particles obtained by the production method of the strongly acidic zirconium particles according to claim 20.

22. An electrode for a fuel cell comprising a catalyst layer, the catalyst layer including the proton conducting material according to claim 19 or 21.

23. A production method of a proton conducting membrane comprising:
a polymer solution preparation step of obtaining a polymer solution by dissolving a proton conducting polymer in a first polar organic solvent;
a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent;
a second dispersing step of obtaining a composite material dispersion by mixing the polymer solution with the zirconium nanoparticle dispersion, the dispersion including the polar organic solvents and a proton conducting composite material having the proton conducting polymer and the zirconium nanoparticles;
an impregnation step of impregnating pores of a porous polymer base material with the composite material dispersion obtained by the second dispersing step; and
a reaction step of obtaining a proton conducting membrane in which a strongly acidic zirconium compound and the proton conducting polymer are fixed to the porous polymer base material by reacting sulfuric acid with the porous polymer base material impregnated with the composite material dispersion, the strongly acidic zirconium compound being produced from the zirconium nanoparticles and the sulfuric acid.

24. The proton conducting membrane obtained by the production method of the proton conducting membrane according to claim 23.

25. A membrane electrode assembly, wherein an electrode and the proton conducting membrane according to claim 24 are used, the electrode having a catalyst layer including the proton conducting material according to claim 19 or 21.

26. A fuel cell, wherein the membrane electrode assembly according to claim 25 is used.

27. A production method of strongly acidic zirconium particles the method comprising:
obtaining zirconium nanoparticles being obtained by reacting a zirconium alkoxide with a chelating agent and a catalyst in a solvent; and
obtaining the strongly acidic zirconium particles by reacting the zirconium nanoparticles with a sulfuric acid solution pH-adjusted by alkali.

28. A proton conducting material, wherein used are strongly acidic zirconium particles obtained by reacting zirconium nanoparticles with a sulfuric acid solution pH-adjusted by alkali, the zirconium nanoparticles obtained by reacting a zirconium alkoxide with a chelating agent and a catalyst in a solvent.

29. A production method of the strongly acidic zirconium particles comprising:
a polymer solution preparation step of obtaining a polymer solution by dissolving a proton conducting polymer in a first polar organic solvent;
a first dispersing step of obtaining a zirconium nanoparticle dispersion by dispersing zirconium nanoparticles in a second polar organic solvent, the zirconium nanoparticles obtained by reacting a zirconium alkoxide with a chelating agent and the catalyst;
a second dispersing step of obtaining a dispersion by pouring the polymer solution into the zirconium nanoparticle dispersion, the dispersion including the polar organic solvents and a proton conducting composite material having the proton conducting polymer and the zirconium nanoparticles;
a proton conducting composite material preparation step of obtaining the proton conducting composite material by removing the first polar organic solvent and the second polar organic solvent from the dispersion obtained by the second dispersing step; and a reaction step of obtaining the strongly acidic zirconium particles by reaction by adding a sulfuric acid solution pH-adjusted by alkali to the proton conducting composite material obtained by the proton conducting composite material preparation step.

30. A proton conducting material, wherein used are the strongly acidic zirconium particles obtained by the production method of the strongly acidic zirconium particles according to claim 29.

31. An electrode for a fuel cell comprising a catalyst layer, the catalyst layer including the proton conducting material according to claim 28 or 30.

32. A production method of a proton conducting membrane comprising:
a polymer solution preparation step of obtaining a polymer solution by dissolving a proton conducting polymer in a first polar organic solvent;
a first dispersing step of obtaining a zirconium nanoparticle dispersion by dispersing zirconium nanoparticles in a second polar organic solvent, the zirconium nanoparticles obtained by reacting a zirconium alkoxide with a chelating agent and a catalyst in a solvent;
a second dispersing step of obtaining a composite material dispersion by mixing the polymer solution with the zirconium nanoparticle dispersion, the dispersion including the polar organic solvents and a proton conducting composite material having the proton conducting polymer and the zirconium nanoparticles;
an impregnation step of impregnating pores of a porous polymer base material with the composite material dispersion obtained by the second dispersing step; and
a reaction step of obtaining a proton conducting membrane in which a strongly acidic zirconium compound and the proton conducting polymer are fixed to the porous polymer base material by reacting a sulfuric acid solution pH-adjusted by alkali with the porous polymer base material impregnated with the composite material dispersion, the strongly acidic zirconium compound being produced from the zirconium nanoparticles and the sulfuric acid solution pH-adjusted by alkali.

33. The proton conducting membrane obtained by the production method of the proton conducting membrane according to claim 32.

34. A membrane electrode assembly, wherein an electrode and the proton conducting membrane according to claim 33 are used, the electrode having a catalyst layer including the proton conducting material according to claim 28 or 30.

35. A fuel cell, wherein the membrane electrode assembly according to claim 34 is used.

36. A production method of strongly acidic zirconium particles the method comprising:
obtaining zirconium nanoparticles being obtained by reacting a zirconium alkoxide with a chelating agent and a catalyst in a solvent; and
obtaining the strongly acidic zirconium particles by reaction by adding the zirconium nanoparticles with sulfonic acid,.

37. The proton conducting material, wherein used are the strongly acidic zirconium particles obtained by the production method of the strongly acidic zirconium particles according to claim 36.
